# EUROPÄISCHE PATENTSCHRIFT

(11) **EP 3 661 657 B1**
(45) Veröffentlichungstag und Bekanntmachung des Hinweises auf die Patenterteilung: **24.08.2022**
(21) Anmeldenummer: 18752417.8
(22) Anmeldetag: 23.07.2018
(51) Int. Cl.: B05B 14/43

(54) **VERFAHREN UND VORRICHTUNG ZUR WIEDERGEWINNUNG VON SPRITZLACKEN AUS SPRITZNEBELN VON SPRITZLACKIERKABINEN**
METHOD AND DEVICE FOR RECOVERING SPRAY PAINT FROM SPRAY MISTS OF SPRAY-PAINTING BOOTHS
PROCÉDÉ ET DISPOSITIF POUR LA RÉCUPÉRATION DE PEINTURES AÉROSOLS PROVENANT DE BROUILLARDS DE PULVÉRISATION DE CABINES DE PULVÉRISATION DE PEINTURE

(30) Priorität: 04.08.2017 DE 102017007329
(43) Veröffentlichungstag der Anmeldung: 10.06.2020
(73) Patentinhaber: Wenker GmbH & Co. Kg, 48683 Ahaus (DE)
(72) Erfinder: LEERS, Franz, 48683 Ahaus (DE)
(74) Vertreter: Münch, Volker
(86) Internationale Anmeldenummer: PCT/EP2018/000369
(87) Internationale Veröffentlichungsnummer: WO 2019/025020

(56) Entgegenhaltungen:
- DE-A1-102015 000 585
- JP-A- S5 631 469

## Beschreibung

### Gebiet der Erfindung

Die vorliegende Erfindung betrifft ein Verfahren zur Wiedergewinnung von Spritzlacken aus Spritznebeln oder Overspray von Spritzlackierkabinen.

Außerdem betrifft die vorliegende Erfindung eine Vorrichtung zur Wiedergewinnung von Spritzlacken aus Spritznebeln oder Overspray von Spritzlackierkabinen.

Nicht zuletzt betrifft die vorliegende Erfindung die Verwendung der wiedergewonnenen Spritzlacke.

### Stand der Technik

Der in der vorliegenden Anmeldung zitierte Stand der Technik wird durch Bezugnahme Bestandteil der Anmeldung.

Spezifisch für die indirekte Lackverarbeitung durch Zerstäuben oder Spritzen sind die Spritznebel. Damit verbunden sind eine Abgabe von Lösemitteln an die Umgebung und der Overspray. Aus Arbeits- und Umweltschutzgründen sind deshalb Maßnahmen zu ergreifen, die nicht unbeträchtlichen Lösemittel- und Lacknebelmengen, die das Lackierobjekt nicht treffen, abzuführen, eventuell zurückzugewinnen oder zu entsorgen. Die entstehenden Spritznebel haben auch in prozesstechnischer Hinsicht unerwünschte Nebeneffekte. Durch vagabundierende Nebel können bereits lackierte Objekte kontaminiert werden, wenn sie sich auf der frischen, noch viskosen Lackierung niederschlagen. Filmfehler in Form von Kratern sind häufig die Folge,

Es ist deshalb notwendig, die Spritznebel und verdunstende Lösemittel unter Kontrolle zu halten. Dazu gibt es in handwerklichen Betrieben Spritzstände, die durch Absaugen und Filtern Lösemittel und Spritznebel mithilfe der Luftführung durch Wasservorhänge hinter dem Spritzstand diese Aufgabe erledigen können. Indes ist dieses Verfahren nicht dazu geeignet, den Spritzlack quantitativ oder nahezu quantitativ wiederzugewinnen.

Bei der industriellen Verarbeitung werden die Spritzeinrichtungen in geschlossene Kabinen gebracht. In diesen werden die verdunstenden Lösemittel und der Sprühnebel durch Zufuhr von Frischluft entfernt. Letzteres sorgt in der Kabine für eine möglichst laminare Strömung von oben nach unten. Für Luftsinkgeschwindigkeiten von 0,2-0,5 m/Sekunde müssen deshalb permanent pro Quadratmeter Kabinenfläche 0,2-0,5 m³/Sekunde oder 720 bis 1800 m³/Stunde konditionierter Luftmengen zugeführt werden. Bei Kabinengrundflächen von 200 m² ist das stündlich bis zu 400.000 m³ gereinigte und konditionierte Frischluft. So können Lackierfehler vermieden und die MAK-Werte der Arbeitsstoffe eingehalten werden.

Zur schnellen und vollständigen Spritznebelaufnahme werden die Spritznebel durch Verengungen in den Absaugvorrichtungen stark beschleunigt, um anschließend mit hoher Relativgeschwindigkeit in eine wässrige Phase aufgenommen zu werden. Das gelingt in den nach dem Venturi-Prinzip arbeitenden Diffusoren besonders gut. Nach der Beschleunigung der Spritznebel beladenen Abluft werden durch die Erweiterung des Öffnungsquerschnitts der Venturi-Düsen starke Wirbel gebildet. Der dabei entstehende Unterdruck zieht die Waschflüssigkeit in den Luftstrom, wodurch die Lacknebel eingefangen werden.

Die in dieser Weise gewonnene Flüssigkeit wird einem Systemtank zugeführt, worin sich Lackschlamm absetzt, der in ein Lackschlammabsetzbecken überführt wird. Eine direkte Wiedergewinnung der ursprünglich verwendeten überschüssigen Spritzlacke ist mithilfe dieser Technologie nicht möglich.

(Vgl. Arthur Goldschmidt, Hans-Joachim Streitberger, BASF-Handbuch Lackiertechnik, Vincentz Verlag, Hannover, 2002, Seiten 583-588, »4.2.1.5 Kabinenkonditionierung und Spritznebelbeseitigung«)

Im Falle der Spritzlackierung von Pulverlacken wird der Overspray durch die Schwerkraft und die vertikal nach unten gerichtete Luftströmung aus den Kabinen geführt. Zur Rückgewinnung dienen Zyklone oder Fliehkraftabscheider, worin der mit Pulverlack beladene Luftstrom durch tangentiale Zufuhr in Rotation versetzt wird. Die Zentrifugalkräfte treiben die Pulverpartikel zur Zyklonwand, wo sie aufgrund der Schwerkraft nach unten fallen, um dadurch in einem Auffangbehälter gesammelt zu werden.

(Vgl. Arthur Goldschmidt, Hans-Joachim Streitberger, BASF-Handbuch Lackiertechnik, Vincentz Verlag, Hannover, 2002, Seiten 605-588, »Rückgewinnung«)

Weitere Verfahren, die die Wiederverwendung von Overspray zum Ziel haben, sind ebenfalls bekannt.

So geht aus der deutschen Patentanmeldung DE 44 21 172 A1 ein Verfahren zur Herstellung eines bei 50 bis 90 °C trocknenden Lacks für eine Steinschlagschutzschicht hervor, bei dem man nicht koaguliertes Overspray aus wasserlöslichen Basislacken enthaltendem Kabinenabwasser durch Wasserentzug auf eine Festkörperkonzentration von etwa 10 bis 35 Gew.-% bringt und mit den für die gewünschten Eigenschaften der Steinschlagschutzschicht erforderlichen Komponenten versetzt. Der durch dieses Verfahren gewonnene Lack ist aber nicht mehr für die ursprüngliche Anwendung als Basislack geeignet.

Aus der internationalen Patentanmeldung WO 92/19686 A1 geht ein Verfahren zur Behandlung und Wiedergewinnung des Oversprays aus der Spritzapplikation von wässrigen Lacken hervor, bei dem alle Feststoffe durch mindestens einen Elektrophoreseschritt abgetrennt und wiederverwendet werden. Um wieder einen mit dem ursprünglich eingesetzten Spritzlack vergleichbaren Spritzlack zu erhalten, müssen die abgetrennten Feststoffe aufgearbeitet werden, was das Verfahren insgesamt aufwändig macht.

Des Weiteren ist aus der japanischen Offenlegungsschrift Jp S59-42065 A eine Spritzkabine, in der Spritznebel aufgefangen und wiedergewonnen werden können, bekannt. Dazu werden die Spritznebel in einem trockenen Separator aufgefangen, wonach die Lackierung angehalten wird. Danach werden ein Kühlmittel und ein Luftstrom über den Separator geführt, wodurch die aufgefangenen Spritznebel verfestigt werden. Die verfestigten Spritznebel fallen wegen des Luftstroms auf die geneigte Fläche einer Vakuumkammer und werden an deren Basis gesammelt. Der Nachteil dieses Verfahrens ist, dass die Lackierung immer wieder unterbrochen werden muss, so dass kein kontinuierliches Verfahren möglich ist.

Außerdem ist aus der deutschen Gebrauchsmusterschrift DE 20 2014 001 981 U1 eine Anlage zum Abscheiden von Lackpartikel aus einem Luftstrom aus einer Beschichtungsanlage bekannt, wobei der Luftstrom über eine Zuführung einer Trenneinrichtung zugeleitet wird, in der die Lackpartikel aus der Luft abgetrennt werden. Dazu werden Eiskristallteilchen in den Luftstrom eingeblasen, so dass die Lackpartikel agglomerieren und abgetrennt werden können. Nachteilig ist, dass die Zusammensetzung des so erzeugten Materials nicht mehr derjenigen des ursprünglichen Lacks entspricht.

Graupel ist eine Form von Niederschlag bei dem Schneekristalle durch angefrorene Wassertröpfchen zu kleinen, bis zu 5 mm großen Kügelchen verklumpt werden. Bei Korngrößen von unter 1 mm Durchmesser spricht man auch von Griesel. Die Partikel sind im Vergleich zu Hagel deutlich kleiner und weisen lediglich einen maximalen Durchmesser bis zu 5 mm auf. Ihre Dichte ist geringer als die von Hagelkörnern und sie haben eine rauere Struktur. Dadurch fallen sie langsamer und können kaum Schaden anrichten. Im Gegensatz zum Hagel fallen Graupel und Griesel hauptsächlich im Winter bei Temperaturen um 0 °C an.

Aus der deutschen Patentanmeldung DE 10 2015 000 585 A1 ist ein Verfahren zum Betreiben einer Oberflächenbehandlungsanlage bekannt, bei dem
a) Overspray, der in einer Beschichtungskabine entsteht, von einem Luftstrom aufgenommen wird;
b) der mit Overspray beladene Luftstrom als Abluftstrom zu einer Abscheideeinheit geführt wird, in der Overspray abgeschieden wird;
c) dem Abluftstrom in einem Zuführbereich stromauf der Abscheideeinheit und/oder in einem Innenraum der Abscheideeinheit ein Filterhilfsmaterial zugeführt wird, das mit dem Overspray ein Abscheidegemisch bildet, das sich in oder an der Abscheideeinheit abscheidet.

Als Filterhilfsmaterial können verflüssigbare Gase, insbesondere Kohlendioxid, Stickstoff, Luft, Sauerstoff, Wasserstoff, Edelgase sowie Kohlenwasserstoffe; Verbindungen die bei Normalbedingungen einen erhöhten Sättigungsdampfdruck haben, insbesondere Alkohol, Treibmittel oder Kältemittel; oder Verbindungen, die bei Temperaturen bis 150° einen hohen Sättigungsdampfdruck haben, insbesondere Wasser oder Glykole, verwendet werden.

Das Filterhilfsmaterial soll in der Abscheideeinheit knapp unterhalb des Gitterrostes, der die Beschichtungskabine von der Abscheideeinheit trennt, eingedüst werden. Es wird sogar vorgeschlagen, eine Eindüsung bereits in der Beschichtungskabine vorzusehen. Nachteilig ist hierbei, dass die laminare Strömung der Luft in der Beschichtungskabine gestört werden kann. Außerdem besteht die Gefahr, dass kaltes Filterhilfsmaterial die thermischen Bedingungen in der Beschichtungskabine direkt beeinflussen kann, was zu einer uneinheitlichen Lackierung führen kann.

Der in der Abscheideeinheit mithilfe des Filterhilfsmaterial gebundene und/oder ausgefrorene, feinteilige Overspray soll vorzugsweise einem Einweg-Filtermodul zugeführt, das aus einem nassfesten Recyclingmaterial gefertigt sein soll. Als Recyclingsmaterialien sollen Cellulosematerialien wie gegebenenfalls behandelte Papiermaterialien und Pappmaterialien, Wellkarton, Kartone mit stehender Welle, Kartone mit Wabenstruktur oder Wickelkartone, MDF-Materialien oder Kunststoffe wie Polyethylen oder Polypropylen in Betracht kommen. Der Boden kann auch separat durch eine Euro-Palette aus Holz gebildet sein. Wenn das Einweg-Filtermodul seine Beladungsgrenze erreicht hat, soll es gegen ein neues, unbeladenes Einweg-Filtermodul ausgetauscht werden. Nachteilig ist hier, dass die beladenen Einweg-Filtermodule als Sondermüll entsorgt werden müssen.

Nicht zuletzt geht aus der deutschen Patentanmeldung DE 10 2015 000 585 A1 nicht hervor, ob der auf den Einweg-Filtermodulen abgeschiedene Overspray überhaupt wieder als Spritzlack verwendet werden kann.

Aus dem deutschen Patent DE 10 2016 008 255 B3 geht des Weiteren eine gattungsgemäße Vorrichtung zur Wiedergewinnung von Spritznebeln aus Spritzlackierkabinen hervor, bei der unterhalb einer Spritzlackierkabine eine Vorrichtung zur Wiedergewinnung von Spritznebeln mit einer Spritznebellenkung unterhalb des Siebbodens und einer darunter angeordneten Verwirbelungskammer mit Kältemittelzuleitungen und Kältemitteldüsen zur Zuleitung und Eindüsen eines Kältemittels hervor. In der Verwirbelungskammer werden aus den Luft- und Spritznebelwirbeln Graupel- und Grieselpartikel erzeugt. Indes umfasst die bekannte Vorrichtung keinen Verwirbelungsreaktor, der eine thermische Pufferzone mit dem gleichen horizontalen Umriss wie der Siebboden, eine Verwirbelungszone mit dem gleichen horizontalen Umriss wie die thermischen Pufferzone und eine Fallzone mit dem gleichen horizontalen Umriss wie die Verwirbelungszone aufweist. Die bekannte Vorrichtung weist bereits zahlreiche Vorteile gegenüber anderen gattungsgemäßen Vorrichtungen auf, sie hat indes das Potenzial, noch in vorteilhafter Weise weiter entwickelt zu werden.

### Aufgabe der vorliegenden Erfindung

Der vorliegenden Erfindung lag demnach die Aufgabe zu Grunde eine Vorrichtung und ein Verfahren zur Wiedergewinnung von Spritzlacken aus Spritznebeln von Spritzlackierkabinen zu finden, mit deren Hilfe die Spritzlacke quantitativ oder nahezu quantitativ mit denselben oder nahezu denselben Eigenschaften wie die ursprünglich eingesetzten Spritzlacke wiedergewonnen und für denselben Verwendungszweck wieder angewandt werden können. Dabei soll die Vorrichtung kompakt sein und das Verfahren soll - wenn überhaupt - nur geringe Mengen an Sondermüll erzeugen.

### Lösung der vorliegenden Aufgabe

Diese und weitere Aufgaben werden nach dem Vorschlag der Erfindung durch die Vorrichtung und das Verfahren zur Wiedergewinnung von Spritzlacken aus Spritznebeln von Spritzlackierkabinen mit den Merkmalen der unabhängigen Patentansprüche gelöst. Vorteilhafte Ausgestaltungen der Erfindung sind durch die Merkmale der Unteransprüche gegeben.

### Ausführliche Beschreibung der Erfindung

Die vorliegende Erfindung betrifft eine Vorrichtung zur Wiedergewinnung von Spritzlacken aus Spritznebeln von Spritzlackierkabinen.

Spritzlackierkabinen sind üblich und bekannt und können je nach Verwendungszweck unterschiedliche Dimensionen haben. So gibt es Spritzlackierkabinen, die vor allem in Handwerksbetrieben eingesetzt werden, oder industriellen Anlagen, die kontinuierlich oder diskontinuierlich betrieben werden. Ein Haupteinsatzgebiet für solche industriellen Spritzlackierkabinen ist die Automobilserienlackierung (OEM, Original Equipment Manufacturing) in der Automobilindustrie sowie in der Automobilzuliefererindustrie.

Im Allgemeinen haben die Spritzlackierkabinen eine vertikale Außenwand, eine horizontale Decke und einen horizontalen Boden, die einen geschlossenen, gasdichten und flüssigkeitsdichten Raum bilden. Je nach Größe können sie mehrere Stockwerke hoch und von innen und außen begehbar sein.

Sie weisen mindestens eine, insbesondere eine, für den jeweiligen Verwendungszweck geeignet dimensionierte Spritzlackierkabine mit mindestens einer, insbesondere einer Luftzuleitung auf, über die gereinigte Frischluft in mindestens einen, insbesondere einen Verteilerraum eingeleitet wird. Von da aus strömt die Luft durch eine horizontal angeordnete, luftdurchlässige Filterdecke vorzugsweise als laminare oder nahezu laminare Luftströmung in den Spritzkabinenraum.

In dem Spritzkabinenraum ist mindestens ein mit einem Spritzlack zu lackierendes Objekt, beispielsweise Holzteile, Möbel, weiße Ware, Flugzeugteile oder Kraftfahrzeugkarosserien vorzugsweise an Transportvorrichtungen hängend oder vorzugsweise auf Transportvorrichtungen stehend platziert. Mithilfe der Transportvorrichtungen können beispielsweise Kraftfahrzeugkarosserien aus der Spritzkabine zu weiteren Vorrichtungen in den Lackierstraßen wie Trockenöfen oder Bestrahlungsvorrichtungen weitergeführt werden. Vergleichbares gilt für die hängend fixierten Objekte.

Auf die Oberfläche des mindestens einen zu lackierenden Objekts wird mithilfe mindestens einer Spritzlackiervorrichtung mit mindestens einer Sprühdüse,der Spritzlack appliziert.

Als Spritzlackiervorrichtungen werden vorzugsweise manuell geführte Spritzlackierpistolen oder computergesteuerte Spritzlackierroboter verwendet.

Bei dem Spritzlack selbst kann es sich um einen wässrigen oder lösemittelhaltigen, physikalisch trocknenden Lack, oxidativ härtenden Lack, Zweikomponentenlack, Einbrennlack oder strahlenhärtbaren Lack, der insbesondere mit IR-Strahlung, sichtbarem Licht, UV-Strahlung und/oder Elektronenstrahlung gehärtet werden kann, handeln. Die unterschiedlichen Härtungsmechanismen können in ein und demselben Spritzlack angewandt werden. Man spricht dann auch von »Dual-Cure-Lacken«.

Der Spritzlack kann in unterschiedlichen Anwendungsbereichen als Schiffslack, Bautenlack, Möbellack oder Kraftfahrzeuglack angewandt werden. Beispielsweise wird er bei der Kraftfahrzeuglackierung in der Form von Klarlack, Unidecklack, Basislack, Füller, Steinschlagschutzlack, Unterbodenschutzlack und Reparaturlack verwendet.

Spritzlacke dieser Art sind üblich und bekannt und am Markt erhältlich. Beispiele geeigneter Rezepturen finden sich in dem Lehrbuch von Bodo Müller und Ulrich Poth, »Lackformulierungen und Lackrezeptur«, Vincentz Verlag, Hannover, 2003, Seiten 73 bis 222.

Im Allgemeinen verlässt der Spritzlack die Sprühdüsen der Spritzlackiervorrichtungen in der Form eines Lackspritzkegels und trifft auf die Oberfläche des zu lackierenden Objekts auf. Dabei treffen bekanntermaßen erhebliche Mengen an Spritzlack nicht auf der Oberfläche auf, sondern bilden Spritznebel oder Overspray.

Die Spritznebel werden durch den laminaren Luftstrom durch mindestens einen, insbesondere einen, horizontalen, luftdurchlässigen und spritznebeldurchlässigen Siebboden aus der mindestens einen Spritzlackierkabine entfernt und treten in die mindestens eine Vorrichtung zur Wiedergewinnung von Spritzlack aus Spritznebeln ein.

Dabei strömen die Spritznebel in mindestens eine thermische Pufferzone mit dem gleichen horizontalen Umriss wie der mindestens eine Siebboden ein. Sinn und Zweck der thermischen Pufferzone ist es zu verhindern, dass die physikalisch chemischen Bedingungen, insbesondere die thermischen Bedingungen und die Luftfeuchtigkeit in der mindestens einen Spritzlackierkabine nachteilig beeinflusst werden. Die Höhe der mindestens einen thermischen Pufferzone kann breit variieren und so hervorragend den Erfordernissen des Einzelfalls angepasst werden. Vorzugsweise macht die Höhe der mindestens einen thermischen Pufferzone 10 bis 50 %, bevorzugt 10 bis 40 % und insbesondere 10 bis 30 % der gesamten Höhe von thermischer Pufferzone, Verwirbelungszone und Fallzone aus.

Die Spritznebel strömen weiter in mindestens eine Verwirbelungszone, die den gleichen horizontalen Umriss wie die mindestens eine thermische Pufferzone hat.

Die mindestens eine Verwirbelungszone umfasst mindestens eine feststehende, horizontal und/oder im Wesentlichen horizontal oder vertikal und/oder im Wesentlichen vertikal ausgerichtete Kältevorrichtung.

"Im Wesentlichen" bedeutet, dass der betreffende Parameter von dem exakten Parameter in einem Ausmaß abweichen darf, dass die Funktion der betreffenden Vorrichtung nicht oder nur unwesentlich nachteilig beeinflusst wird.

Die mindestens eine Kältevorrichtung wird von mindestens einem Kältemittelohr und vorzugsweise von mindestens zwei, bevorzugt von mindestens drei und insbesondere von mindestens vier Kältemittelleitungsrohren gebildet. Werden mehr als ein Kältemittelleitungsrohr verwendet, sind sie bevorzugt in der Form von Sprührohrrosten angeordnet. Diese können parallel und/oder über Kreuz sowie auf Lücke und/oder deckungsgleich übereinander angeordnet werden. Den Sprührohrrosten werden dann über eine Kältemittelzuführung mithilfe einer Förderpumpe und einer Kältemittelverteilerleitung Kältemittel unter Überdruck zugeführt.

Jedes Kältemittelleitungsrohr weist mindestens zwei, vorzugsweise mindestens drei, insbesondere mindestens vier und insbesondere mindestens fünf Kältemitteldüsen mit jeweils einem Kältemitteldüsenkanal auf, aus dem das Kältemittel als Kältemittelsprühkegel in die Verwirbelungszone gesprüht wird. Dabei können die Kältemitteldüsen in unterschiedlichen Richtungen an den Kältemittelleitungsrohren angeordnet sein. Beispielsweise können sie nach oben zur thermischen Pufferzone hin, zur Seite und/oder nach unten zur Fallzone ausgerichtet sein. Dabei können sie auf Lücke und/oder auf Deckung stehen. Um eine besonders starke Verwirbelung des Kältemittels mit den Spritznebeln zu erzielen, können Kältemitteldüsen, die in alle Richtungen weisen, angewandt werden. Als Kältemitteldüsen werden vorzugsweise übliche und bekannte Klemmdüsen aus Kunststoff und/oder Metall verwendet, die jeweils in eine Durchbohrung gesteckt werden müssen und dann mithilfe von Klemmvorrichtungen, die das Kältemittelleitungsrohr umgreifen, fixiert werden können. Dies hat den besonderen Vorteil, dass zum einen die Klemmdüsen abgenommen und gereinigt werden können und zum anderen, dass eine Vielzahl unterschiedlicher Ausführungsformen von Klemmdüsen am Markt erhältlich sind, sodass der Fachmann das für den jeweiligen Verwirbelungsreaktor optimale Modell auswählen kann. Es gibt indes auch die Möglichkeit, Düsen von PNR (www.pnr.eu) zu verwenden, die in die Durchbohrungen eingeschraubt werden. Auch für solche Düsen steht eine breite Auswahl zur Verfügung.

Die Kältemittelverteilerleitung für einen Sprührohrrost kann außerhalb des mindestens einen Verwirbelungsreaktors liegen. Es ist jedoch energetisch günstiger, wenn die Kältemittelverteilerleitung innerhalb des Verwirbelungsreaktor liegt.

Das überschüssige Kältemittel wird in einer Kältemittelsammelleitung gesammelt und über einen Kältemittelauslass abgeleitet.

In einer weiteren Ausführungsform ist die Kältevorrichtung käfigförmig mit einer Kältemittelverteilerleitung und einer Kältemittelsammelleitung, die beide jeweils einer gedachten geschlossenen Linie folgen, wobei die von der Kältemittelverteilerleitung und der Kältemittelsammelleitung umschlossenen Ebenen parallel oder im Wesentlichen parallel zueinander horizontal oder im Wesentlichen horizontal oder parallel oder im Wesentlichen parallel zueinander vertikal oder im Wesentlichen vertikal angeordnet sind und wobei die Kältemittelleitungsrohre mit den Kältemitteldüsen die Kältemittelverteilerleitung und die Kältemittelsammelleitung fluidmäßig miteinander verbinden.

Die gedachten geschlossenen Linien können die unterschiedlichsten Formen aufweisen. Vorzugsweise sind sie kreisförmig, ellipsoid oder oval oder dreieckig, viereckig, trapezförmig, rautenförmig, fünfeckig, sechseckig, siebeneckig, achteckig oder sternförmig mit abgerundeten Ecken und/oder nach innen und/oder nach außen gebogenen Kanten.

Vorzugsweise verlaufen die Kältemittelleitungsrohre geradlinig, bezüglich des Käfigs nach innen und/oder nach außen gebogen, zickzackförmig, wellenförmig und/oder sägezahnförmig verlaufen.

Besonders bevorzugt sind die Kältemitteldüsen und damit die Kältemittelsprühkegel in Richtung des Zentrums der mindestens einen käfigförmigen Kältevorrichtung gerichtet, sodass sich in deren Innenraum, in den die Spritznebel hinein gesaugt werden, die Spritznebel und die sich bildenden Graupel- und/oder Grieselpartikel besonders intensiv verwirbelt werden.

Vorzugsweise weist das mindestens eine Kältemittel eine Temperatur von -190 °C bis 0 °C, bevorzugt -100 °C bis -4 °C und insbesondere -50 °C bis -10 °C auf. Vorzugsweise ist das Kältemittel bei Raumtemperatur und Atmosphärendruck ein Gas. Besonders bevorzugt werden ökologisch unbedenkliche, nicht toxische, Gase verwendet. Beispiele geeigneter Gase sind Luft, Stickstoff, Kohlendioxid und Helium. Insbesondere wird Luft verwendet. Die Gase können getrocknet sein oder Spuren von Wasser enthalten, die sich als Eis auf den sich bildenden Graupel- und/oder Grieselpartikel niederschlagen.

Das Gemisch aus Kältemittel, Luft und Graupel- und/oder Grieselpartikel gelangt des Weiteren in mindestens eine Fallzone mit mindestens einer Lenkung für die gebildeten Graupel- und/oder Grieselpartikel. Die mindestens eine Fallzone hat unterhalb der mindestens einen Verwirbelungszone den gleichen horizontalen Umriss wie letztere und verjüngt sich dann in ihrem Umriss konisch nach unten bis zu mindestens einem horizontal angeordneten, für Luft, Kältemittel und Graupel- und/oder Grieselpartikel durchlässigen Siebboden.

Um das Absetzen von Graupel- und/oder Grieselpartikel in Ecken und an Kanten zu vermeiden, sind im Bereich der mindestens einen Lenkung in der mindestens einen Fallzone die Übergänge zwischen Bauteilen wie Übergänge zwischen Teilen der Wände und/oder Übergänge zwischen Wänden und der mindestens einen Siebboden nicht eckig, sondern konvex oder konkav gebogen.

Vorzugsweise wird die mindestens eine Lenkung für die gebildeten Graupel- und/oder Grieselpartikel von den Wänden der mindestens einen Fallzone gebildet. Vorzugsweise hat die mindestens eine Lenkung einen rechteckigen, quadratischen oder runden Querschnitt, wobei die Ecken abgerundet und/oder die Kanten nach innen oder außen gebogenen sein können.

Das besagte Gemisch aus Gasen und Partikeln gelangt dann in mindestens eine von dem mindestens einen Siebboden ausgehende Lenkung, die sich in ihrem Querschnitt nach unten verjüngt. Somit hat diese mindestens eine Lenkung einen kleineren Querschnitt als die mindestens eine Lenkung in der mindestens einen Fallzone. Ansonsten gilt das vorstehend bei der mindestens einen Lenkung in der mindestens einen Fallzone Gesagte auch in diesem Falle.

Diese mindestens eine Lenkung leitet das besagte Gemisch aus Gasen und Partikeln zu mindestens einer Vorrichtung zur Abscheidung der Graupel- und/oder Grieselpartikel aus der Gasphase und zu mindestens einem darunter angeordneten Auffangbehälter für die abgeschiedenen Graupel- und/oder Grieselpartikel und den wiedergewonnenen Spritzlack.

Die Abmessungen des mindestens einen Verwirbelungsreaktors richten sich im Wesentlichen nach der zugeführten Luftmenge und der Menge der mitgeführten Spritznebel sowie der erforderlichen Kühlkapazität, um die Graupel- und/oder Grieselpartikel zu erzeugen und während des weiteren Verfahrens in diesem Zustand zu stabilisieren. Der Fachmann kann daher die Abmessungen, ohne erfinderisch tätig zu werden, aufgrund seiner Erfahrung rechnerisch ermitteln.

Die Wandstärke des mindestens einen Verwirbelungsreaktors richtet sich im Wesentlichen nach den Abmessungen, dem Material, aus dem er aufgebaut ist, und den Kräften, die aufgrund des Gewichts der mindestens einen Kältevorrichtung auf die Reaktorwand ausgeübt werden. Der Fachmann kann daher die Wandstärke, ohne erfinderisch tätig zu werden, aufgrund seiner Erfahrung rechnerisch ermitteln. Vorzugsweise liegt die Wandstärke der Reaktorwand bei 0,5 cm bis 2 cm.

Die Bauteile des Verwirbelungsreaktors sind aus mindestens einem Material aufgebaut, das korrosionsstabil, kältestabil, stabil gegenüber Versprödung und bei starken thermischen Schwankungen stabil ist. Beispiele geeigneter Materialien sind V2A-Stahl, V4A-Stahl oder bei tiefen Temperaturen schlagfeste Kunststoffe wie High Impact Polystyrol, Polyoxymethylen, ABS, Polycarbonat, Polysulfon oder Polyvinylidenfluorid oder glasfaserverstärkte oder kohlefaserverstärkte Kunststoffe. Insbesondere wird V4A-Stahl verwendet

Vorzugsweise ist die Oberfläche der Bauteile des mindestens einen Verwirbelungsreaktors hydrophob oder ultrahydrophob. Dies kann durch die Verwendung fluorierter Kunststoffe wie Teflon, Nanostrukturen, die einen Lotuseffekt hervorrufen, oder hierarchische Strukturen, bei denen Nanostrukturen auf Mikrostrukturen angeordnet sind, erzielt werden. Hierdurch wird in vorteilhafter Weise erreicht, dass sich kein Eis und/oder Graupel- und Grieselpartikel auf den Bauteilen festsetzen.

Um eine Korrosion und/oder eine mechanische Schädigung der Oberfläche der Bauteile des mindestens einen Verwirbelungsreaktors durch die Graupel- und/oder Grieselpartikel zu vermeiden, kann die Oberfläche mit einer verschleißfesten Antihaftschicht, wie zum Beispiel einer Chromnitrid-Schicht beschichtet werden.

Vorzugsweise ist der mindestens eine Verwirbelungsreaktor mit einer üblichen und bekannten äußeren Isolierungsschicht versehen oder er wird von außen aktiv gekühlt.

In dem mindestens einen, insbesondere einen, Verwirbelungsreaktor bilden sich verwirbelte Graupel- und/oder Grieselpartikel mit insgesamt derselben stofflichen Zusammensetzung wie die Spritznebel. Dies ist ein besonderer Vorteil der erfindungsgemäßen Vorrichtung, der dadurch erzielt wird, dass keine zusätzlichen Materialien hinzugefügt werden, die sich ebenfalls verfestigen wie etwa Eis oder Wasser und so die stoffliche Zusammensetzung der Spritznebel und der Graupel- und/oder Grieselpartikel verfälschen.

Durch die mindestens eine Lenkung unterhalb des Siebbodens werden die Graupelund/oder Grieselpartikel sowie die Luft und das Kältemittel in mindestens eine, insbesondere eine, Vorrichtung zur Abscheidung der Graupel und/oder Grieselpartikel aus der Gasphase geleitet.

An und für sich können alle üblichen und bekannten Vorrichtungen zur Abscheidung von festen Partikeln aus der Gasphase verwendet werden. Erfindungsgemäß ist es indes von Vorteil, wenn man hierfür eine Mehrstufenzentrifuge, insbesondere Zweistufenzentrifuge, und/oder ein Zyklon bzw. einen Zyklonabscheider oder Fliehkraftabscheider verwendet.

Zweistufenzentrifugen sind seit langem bekannt und werden im Einzelnen in der deutschen Offenlegungsschrift DE 199 49 289 A1, der europäischen Patentanmeldung EP 1 092 478 A1, der deutschen Offenlegungsschrift DE 36 22 959 A1, dem Gebrauchsmuster DE 1 947 485 U oder dem Gebrauchsmuster DE 1 823 265 U beschrieben. Üblicherweise arbeiten die Zweistufenzentrifugen kontinuierlich und haben einen sich um eine senkrechte Achse drehenden, nach oben konische erweiternden Korb, der einen oberen Außenrand zum Abschleudern der Partikel aufweist.

Zyklone oder Zyklonabscheider sind ebenfalls seit langem bekannt. Sie dienen der Abscheidung von feinen Partikeln aus Luft/Feststoffgemischen mithilfe von Fliehkraft und Schwerkraft. Multi-, Mehrfach- oder Monozyklone sind heute auf dem Markt gängige Zyklonabscheider. Das zu trennende Gemisch wird einem zylindrischen Behälter mit meist konischem Unterteil tangential oder axial zugeführt. Die Strömung wird dabei entweder durch den tangentialen Eintritt des Gemisches erzeugt oder durch am Umfang des Zyklongehäuses angebrachte Leitschaufeln. Durch die sich im Abscheidungsraum ausbildenden Rotationsströmungen wirken auf die abzutrennenden Partikel Fliehkräfte, die sie nach außen schleudern. Von der Wand des Zyklons sinken die Partikel unter Schwerkraftwirkung nach unten in einen Sammelbehälter.

(Römpp Lexikon Lacke und Druckfarben, Georg Thieme Verlag, Stuttgart, 1998, »Zyklonabscheider«).

Die in dieser Weise abgetrennten Graupel- und/oder Grieselpartikel fallen durch mindestens ein Austrag für die Partikel in mindestens einen, insbesondere einen, darunter angeordneten Auffangbehälter, worin sie aufschmelzen und wieder einen flüssigen Spritzlack bilden, der dieselben oder im Wesentlichen dieselben Eigenschaften wie der ursprüngliche Spritzlack hat und daher demselben Verwendungszweck zugeführt werden kann.

Das Aufschmelzen kann mithilfe von Heizungsvorrichtungen, beispielsweise Induktionsheizungen, die sich im Boden und/oder in und/oder auf den Wandungen des mindestens einen Auffangbehälters befinden, beschleunigt werden. Außerdem können Tauchheizungen zusätzlich oder alleine verwendet werden.

Zur Verbesserung der Homogenität und die Vermeidung der Bildung von Lackschlämmen kann der Inhalt des mindestens einen Auffangbehälters gerührt werden.

Das Gemisch aus zugeführter Luft und gasförmigem Kältemittel wird über mindestens einen Abluftkanal, der im unteren Bereich der Vorrichtung zur Wiedergewinnung von Spritzlack aus Spritznebeln von Spritzlackierkabinen angeordnet ist, entfernt.

Die erfindungsgemäße Vorrichtung zur Wiedergewinnung von Spritzlack aus Spritznebeln von Spritzlackierkabinen ist vorzugsweise in einem Gebäude untergebracht, das aus korrosionsfesten, gegenüber Lösemitteln und Wasser resistenten und gegenüber Kälte und Hitze und raschen Temperaturwechseln stabilen Materialien aufgebaut ist. Beispiele geeigneter Materialien sind gegenüber Säuren und Basen stabile Klinker für die Außenwände, spezielle Kartonagen für die Filterdecke, gegenüber Kälte und Hitze stabile Kunststoffe, die in der Kälte nicht verspröden und in der Hitze unter Belastung nicht kriechen, sowie V2A-Stahl oder V4A-Stahl. Die Teile der erfindungsgemäßen Vorrichtung, in denen die Graupel- und/oder Grieselpartikel erzeugt werden und/oder gehandhabt werden, sind thermisch isoliert und/oder werden aktiv von außen gekühlt.

Die erfindungsgemäße Vorrichtung zur Wiedergewinnung von Spritzlack aus Spritznebeln von Spritzlackierkabinen weist des Weiteren eine übliche und bekannte Mess- und Regelperipherie zur elektronischen, hydraulischen, pneumatischen und/oder mechanischen Steuerung der Materialströme mit den entsprechenden Sensoren auf.

Das erfindungsgemäße Verfahren dient der Wiedergewinnung von Spritzlack aus Spritznebeln von Spritzlackierkabinen. Es ist dadurch gekennzeichnet, dass man
dem mindestens einen Spritzkabinenraum mindestens einer Spritzlackierkabine über mindestens eine Luftzuleitung, mindestens einen Verteilerraum und mindestens eine horizontal angeordnete, luftdurchlässige Filterdecke mindestens eine laminare Luftströmung zuführt;
(b) in den mindestens einen Spritzkabinenraum mindestens ein zu lackierendes Objekt hängend oder stehend platziert und mithilfe mindestens einer manuell geführten Spritzlackierpistole und/oder mindestens eines computergesteuerten Spritzlackierroboters, die oder der jeweils mindestens eine Sprühdüse aufweist, mit mindestens einem Spritzlack lackiert, so dass das mindestens eine zu lackierende Objekt mit mindestens einem applizierten Spritzlack bedeckt wird;
(c) die entstehenden, nach unten strömenden Spritznebel über mindestens einen horizontalen, für Luft und Spritznebel durchlässigen Siebboden in mindestens eine thermische Pufferzone mindestens eines Verwirbelungsreaktors mindestens einer Vorrichtung zur Wiedergewinnung von Spritzlacken aus Spritznebeln einströmen lässt, wobei die mindestens eine Pufferzone den gleichen horizontalen Umriss wie der mindestens eine Siebboden aufweist;
(d) die nach unten strömenden Spritznebel in mindestens eine Verwirbelungszone des gleichen horizontalen Umrisses wie die mindestens eine thermische Pufferzone einströmen lässt, worin die Spritznebel mit Kältemittelwirbeln intensiv vermischt werden, wodurch sich Graupel- und/oder Grieselpartikel mit insgesamt derselben stofflichen Zusammensetzung wie die Spritznebel bilden wobei die Kältemittelwirbel mithilfe mindestens einer Kältevorrichtung, umfassend mindestens ein Kältemittelleitungsrohr mit mindestens zwei Kältemitteldüsen, mindestens eine Kältemittelzuführung und mindestens einen Kältemittelauslass, erzeugt werden;
(e) die in der mindestens einen Verwirbelungszone erzeugten Graupel- und/oder Grieselpartikel zusammen mit dem Kältemittel und der Luft in mindestens eine Fallzone einströmen lässt, wobei die mindestens eine Fallzone unterhalb der mindestens einen Verwirbelungszone den gleichen horizontalen Umriss wie letztere hat und mindestens eine Lenkung für die fallenden Graupel- und/oder Grieselpartikel aufweist, die sich in ihrem Umriss konisch nach unten bis zu mindestens einem horizontal angeordneten, für Luft, Kältemittel und Graupel- und/oder Grieselpartikel durchlässigen Siebboden hin verjüngt;
(f) die durch den mindestens einen Siebboden hindurchgetretenen Graupel- und/oder Grieselpartikel sowie das Kältemittel und die Luft in mindestens einer sich konisch verjüngenden Lenkung mindestens einer Vorrichtung zur Abscheidung der Graupelund/oder Grieselpartikel aus der Gasphase zuführt, worin die Graupel- und/oder Grieselpartikel abgeschieden werden;
(g) die abgeschiedenen Graupel- und/oder Grieselpartikel durch mindestens einen Austrag in mindestens einen darunter angeordneten Auffangbehälter leitet und schmilzt, sodass der Spritzlack gebildet wird; und
(h) die Luft und das Kältemittel durch mindestens ein Polizeifilter und mindestens einen Abluftkanal absaugt.

Der mindestens eine mit dem wiedergewonnenen Spritzlack gefüllte Auffangbehälter wird ausgetragen und durch mindestens einen neuen, leeren Auffangbehälter ersetzt.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen, der durch die Ansprüche definiert wird.

### Kurze Beschreibung der Figuren

Die Erfindung wird nun anhand von Ausführungsbeispielen näher erläutert, wobei Bezug auf die beigefügten Figuren 1 bis 6, die der Verdeutlichung des Prinzips der Erfindung dienen, genommen wird. Es zeigen in vereinfachter, nicht maßstäblicher Darstellung:
- Figur 1: die Draufsicht auf einen vertikalen Längsschnitt durch eine Vorrichtung 1 mit Spritzlackierkabine 2 und Vorrichtung 3 zur Wiedergewinnung von Spritzlack 3.8 aus den Spritznebeln 3.2;
- Figur 2: die Draufsicht auf einen Querschnitt durch die Vorrichtung 3 mit dem Blick auf die Sprührohrroste 3.4 und die Verwirbelungszone 3.1.2;
- Figur 3 (a) bis (j): die Draufsicht auf die Querschnitte von Kältemittelleitungsrohren mit verschiedenen Anordnungen von Kältemitteldüsen bezüglich der Fallrichtung der Spritznebel 3.2;
- Figur 4: die Draufsicht auf den vertikalen Längsschnitt durch einen Ausschnitt der Vorrichtung 3 zur Wiedergewinnung von Spritzlacken 3.8 aus Spritznebeln 3.2 von der Seite her gesehen;
- Figur 5: die Draufsicht auf die Fallzone 3.1.3 des Verwirbelungsreaktors 3.1 bis zur Linie des umlaufenden Übergangs 3.1.3.4 im Querschnitt von oben; und
- Figur 6: einen Blick auf eine Kältevorrichtung 3.4 in der Verwirbelungszone 3.1.2 des Verwirbelungsreaktors 3.1 (Ausschnitt) in perspektivischer Darstellung.

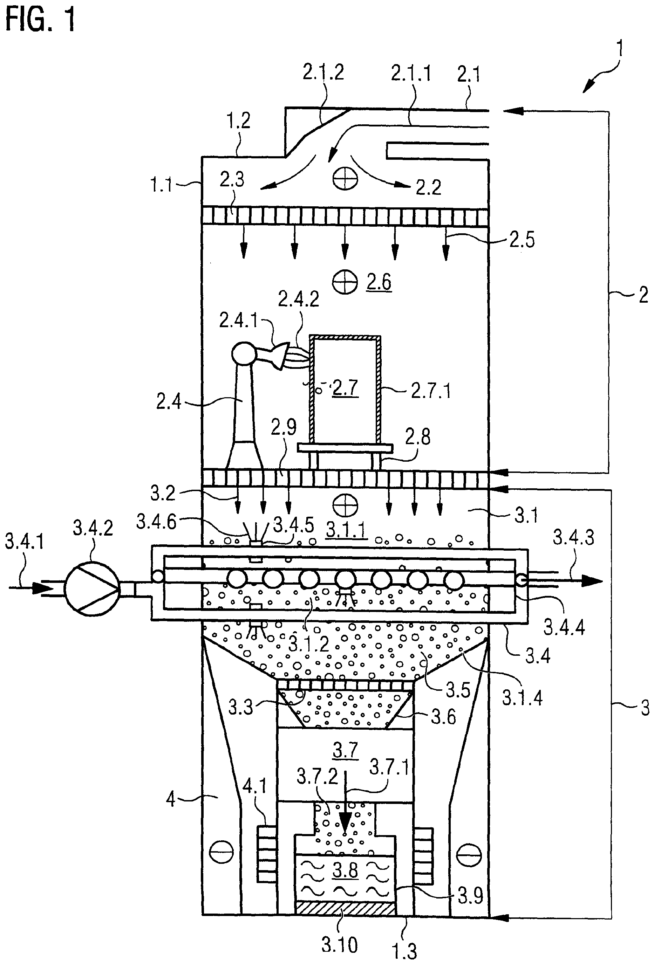

In den Figuren 1 bis 6 haben die Bezugszeichen die folgende Bedeutung:
- 1: Vorrichtung mit Spritzlackierkabine 2 und Vorrichtung 3 zur Wiedergewinnung von Spritzlack 3.8 aus Spritznebeln 3.2
- 1.1: Außenwand der Vorrichtung 1
- 1.2: Decke der Vorrichtung 1
- 1.3: Boden der Vorrichtung 1

- 2: Spritzlackierkabine
- 2.1: Luftzuleitung
- 2.1.1: Zuluft
- 2.1.2: Umlenkblech
- 2.2: Verteilerraum
- 2.3: luftdurchlässige Filterdecke
- 2.4: Spritzlackiervorrichtung mit Roboterarm
- 2.4.1: Sprühdüsen für Spritzlack
- 2.4.2: versprühter Spritzlack
- 2.5: Laminare Luftströmung
- 2.6: Spritzkabinenraum
- 2.7: Zu lackierendes Objekt
- 2.7.1: Applizierter Spritzlack
- 2.8: Transportvorrichtung
- 2.9: Für Luft und Spritznebel 3.2 durchlässiger, begehbarer Siebboden

- 3: Vorrichtung zur Wiedergewinnung von Spritzlacken aus Spritznebeln
- 3.1: Verwirbelungsreaktor
- 3.1.1: Pufferzone
- 3.1.2: Verwirbelungszone
- 3.1.2.1: Kältemittelwirbel
- 3.1.3: Fallzone
- 3.1.3.1: Trichterförmige Verengung
- 3.1.3.2: Konvex gebogener Übergang
- 3.1.3.3: Konkav gebogener Übergang
- 3.1.3.4: Linie des umlaufenden Übergangs
- 3.1.4: Lenkung für Luft- und Luft und Graupel- und/oder Grieselpartikel 3.5
- 3.2: Spritznebel
- 3.3: Für Luft, Kältemittel und Graupel- und/oder Grieselpartikel 3.5 durchlässiger Siebboden
- 3.4: Kältevorrichtung (Sprührohrrost)
- 3.4.1: Kältemittelzuführung
- 3.4.2: Förderpumpe
- 3.4.3: Kältemittelauslass
- 3.4.4: Kältemittelleitungsrohr
- 3.4.4.1: Mit Kältemittel gefüllter Hohlraum
- 3.4.4.2: Kältemittelverteilerleitung
- 3.4.4.3: Kältemittelsammelleitung
- 3.4.4.4: Gasdichte, thermisch isolierte Durchleitung
- 3.4.5: Kältemitteldüse (Klemmdüse, Sprühdüse mit Schraubanschluss)
- 3.4.5.1: Kältemitteldüsenkanal
- 3.4.6: Kältemittelsprühkegel
- 3.4.7: T-Rohrstück
- 3.4.8: Antihaftschicht
- 3.5: Graupel- und/oder Grieselpartikel
- 3.6: Lenkung für Luft und Graupel- und/oder Grieselpartikel 3.5
- 3.7: Vorrichtung zur Abscheidung der Graupel- und/oder Grieselpartikel 3.5 aus der Gasphase
- 3.7.1: Austrag der abgeschiedenen Graupel- und/oder Grieselpartikel 3.7.2
- 3.7.2: Graupel- und/oder Grieselpartikel
- 3.8: Wiedergewonnener Spritzlack
- 3.9: Auffangbehälter
- 3.10: Heizvorrichtung
- 4: Abluftkanal
- 4.1: Polizeifilter

- A: Zuführungsbereich
- A1: Zuführungsbereich vergrößert
- B: Auslassbereich
- B1: Auslassbereich vergrößert
- T: Transportrichtung für die Automobilkarosserie 2.7

| | |
|---|---|
| Pluszeichen im Kreis | Luft- und Materialzufuhr |
| Minuszeichen im Kreis | Luft- und Materialabsaugung |
| Pfeil mit geschwärzter Spitze | Fließrichtung des Kältemittels |

### Ausführliche Beschreibung der Figuren

### Figuren 1, 2 und 3

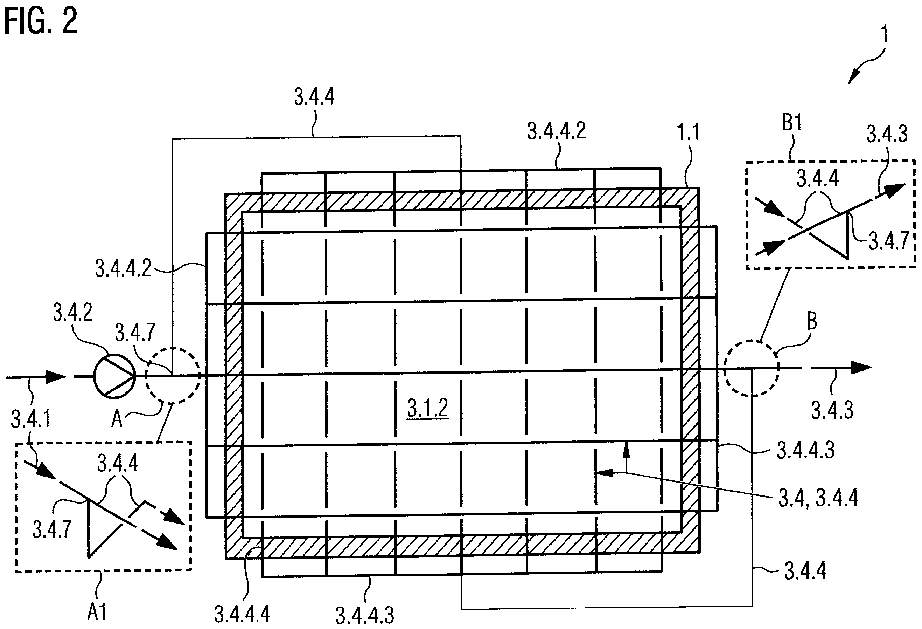

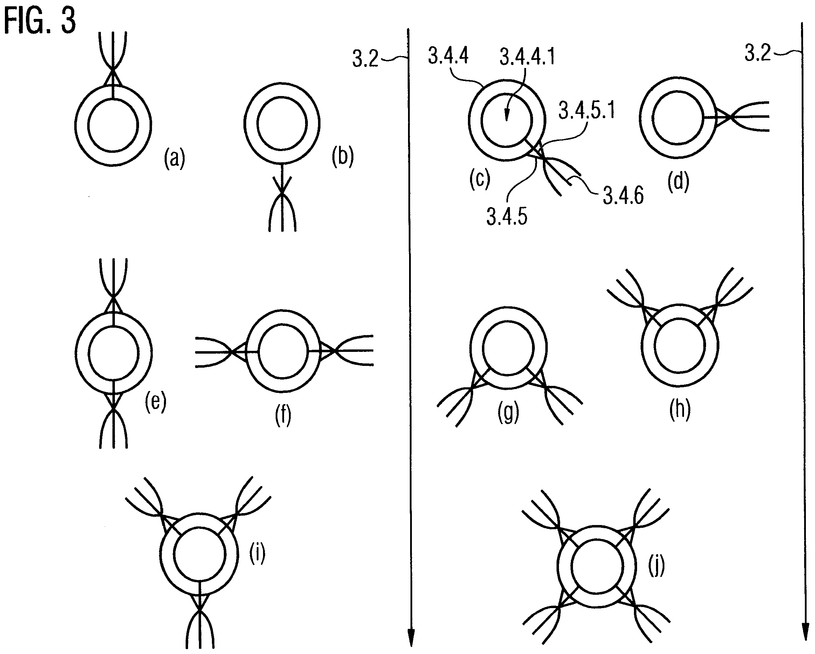

Die Figur 1 zeigt einen vertikalen Längsschnitt durch eine Vorrichtung 1 mit Spritzlackierkabine 2 und Vorrichtung 3 zur Wiedergewinnung von Spritzlack 3.15.1 (vgl. Figuren 2 und 3) aus den Spritznebeln 3.2.

Die Figur 2 zeigt die Draufsicht auf einen Querschnitt durch die Vorrichtung 3 mit dem Blick auf die Sprührohrroste 3.4 und die Verwirbelungszone 3.1.2.

Die Figur 3 (a) bis (j) zeigt die Draufsicht auf die Querschnitte von Kältemittelleitungsrohren mit verschiedenen Anordnungen von Kältemitteldüsen bezüglich der Fallrichtung der Spritznebel 3.2.

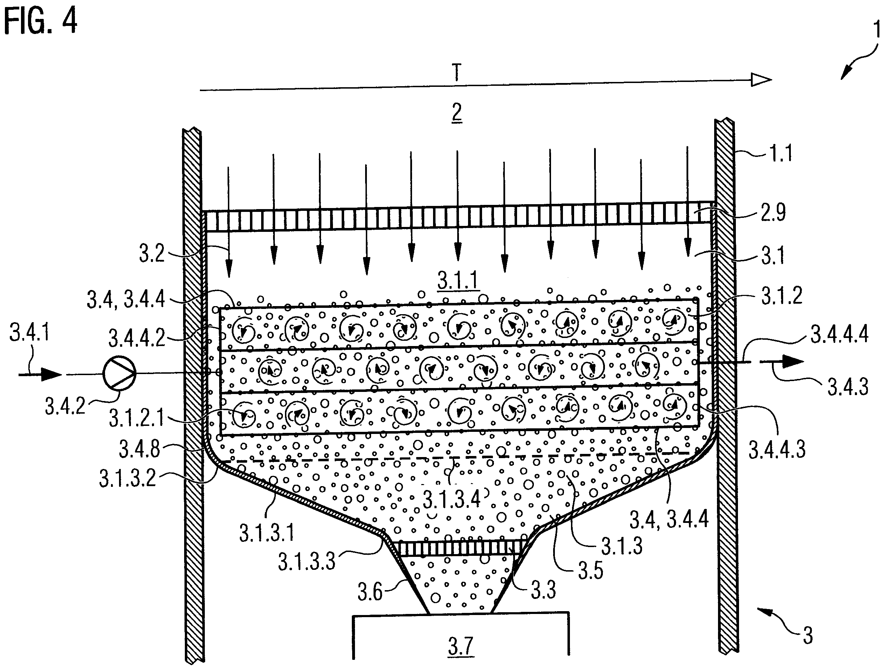

Die Vorrichtung 1 war für die Spritzlackierung von Automobilkarosserien 2.7 ausgelegt und entsprechend dimensioniert. Sie war Bestandteil einer Lackierstraße, wie sie üblicherweise in der Automobilindustrie verwendet wird. Die gasdichten und flüssigkeitsdichten Außenwände 1.1, die gasdichte und flüssigkeitsdichte horizontale Decke 1.2 und der gasdichte und flüssigkeitsdichte Boden 1.3 waren aus Klinker aufgebaut. Die Außenwände 1.1 wiesen verschließbare Serviceöffnungen und begehbare Türen sowie entsprechend angeordnete begehbare Umgänge mit Geländer auf, über die das Betriebspersonal zu den einzelnen Bauteilen gelangen konnte (nicht wiedergegeben). Der Grundriss der Spritzlackierkabine 2 war rechteckig, wobei ihre Längsrichtung in Transportrichtung T (vgl. Figur 4) für die Automobilkarosserien 2.7 verlief.

Über eine Luftzuleitung 2.1 wurde die an einem Umlenkblech 2.1.2 umgelenkte Zuluft 2.1.1 einem Verteilerraum 2.2 zugeführt und durch eine luftdurchlässige Filterdecke 2.3 als Laminarströmung 2.5 in den Spritzkabinenraum 2.6 eingeleitet. Hierbei deuten die Pfeile ohne Bezugszeichen und die Pluszeichen im Kreis die Strömungsrichtung an.

Im Spritzkabinenraum 2.6 befanden sich mehrere computergesteuerte Spritzlackierroboter 2.4 mit Roboterarmen und Sprühdüsen 2.4.1, die einen wässrigen Spritzlack 2.4.2 versprühten. Der versprühte Spritzlack 2.4.2 traf auf eine Automobilkarosserie 2.7 auf und bildete eine Schicht aus appliziertem Spritzlack 2.7.1, wobei erhebliche Mengen an Spritznebeln 3.2 aus Wasser und Lackbestandteilen wie Pigmente, Bindemittel, Vernetzungsmittel, Verdicker, Antioxidantien und Tenside erzeugt wurden.

Die Automobilkarosserie 2.7 war auf einer Transportvorrichtung 2.8 befestigt, mit deren Hilfe die Automobilkarosserie 2.7 nach der Lackierung aus der Spritzlackierkabine 2 bzw. dem Spritzkabinenraum 2.6 herausgefahren und zur nächsten Station der Lackierstraße, beispielsweise einem Ofen zur thermischen Härtung des applizierten Spritzlacks 2.7.1, weiter gefahren wurde.

Die Spritznebel 3.2 wurden durch die Laminarströmung 2.5 über einen für Luft und Spritznebel 3.2 durchlässigen, begehbaren, rechteckigen Siebboden 2.9, der die gesamte Grundfläche der Spritzlackierkabine 2 einnahmen, in die Vorrichtung 3 zur Wiedergewinnung von Spritzlacken aus Spritznebeln ausgetragen. Dort gelangten sie zunächst in die Pufferzone 3.1.1 des Verwirbelungsreaktors 3.1, die bewirkte, dass die thermischen Bedingungen, die in der Vorrichtung 3 herrschten, die thermischen Bedingungen in der Spritzlackierkabine 2 nicht nachteilig beeinflussten. Die Pufferzone 3.1.1 wies denselben Umriss wie der rechteckige Siebboden 2.9 ein.

Von der Pufferzone 3.1.1 gelangten die Spritznebel 3.2 in die Verwirbelungszone 3.1.2, die die den gleichen viereckigen Umriss wie die Pufferzone 3.1.1 aufwies. In der Verwirbelungszone 3.1.2 kamen die Spritznebel 3.2 mit den Kältemittelwirbeln 3.1.2.1 in Kontakt, und es bildeten sich die gewünschten Graupel- und/oder Grieselpartikel 3.5. Die Kältemittelwirbel 3.1.2.1 wurden von trockener, kalter Luft einer Temperatur von -20 °C gebildet. Dazu wurde die Luft im Überdruck über eine Kältemittelzuführung 3.4.1 mithilfe einer Förderpumpe 3.4.2 einem Sprührohrrost 3.4 aus horizontal angeordneten Kältemittelleitungsrohren 3.4.4 als Kältevorrichtung 3.4 zugeführt und aus Kältemitteldüsen 3.4.5, die an den Kältemittelrohren 3.4.4 angeordnet waren in die Verwirbelungszone 3.1.2 eingeblasen. Damit es zu einer besonders starken Verwirbelung der kalten Luft, den Spritznebeln 3.2 und den Graupel- und/oder Grieselpartikeln 3.5 kam, konnten die Kältemitteldüsen 3.4.5 in unterschiedlichen Richtungen bezüglich der Fallrichtung der Spritznebel 3.2 angeordnet sein [vgl. Figur 3 (a) bis (j)]. Ebenso konnten mehr als eine Kältemitteldüse 3.4.5 auf derselben Umfangslinie und/oder nahe derselben Umfangslinie eines Kältemittelleitungsrohrs 3.4.4 angeordnet sein [vgl. Figur 3 (a) bis (j)]. Darüber hinaus konnten die Kältemitteldüsen 3.4.5 in Reihe auf den Kältemittelleitungsrohren 3.4.4 angeordnet sein und dabei auf Lücke und/oder auf Deckung stehen. Die kalte Luft, die unter einem Überdruck stand, wurde aus den Hohlräumen 3.4.4.1 der Kältemittelleitungsrohre 3.4.4 durch die Kältemitteldüsenkanäle 3.4.5.1 der Kältemitteldüsen 3.4.5 herausgepresst und in Form von Sprühkegeln 3.4.6 versprüht [vgl. Figur 3 (a) bis (j)].

Bei der Vorrichtung 3 zur Wiedergewinnung von Spritzlacken aus Spritznebeln gemäß der Figur 1 waren drei Sprührohrroste 3.4 horizontal und parallel übereinander angeordnet, wobei die Kältemittelleitungsrohre 3.4.4 des mittleren Sprührohrrostes 3.4 in einem Winkel von 90° zu den oberen und unteren Sprührohrrosten 3.4 standen (vgl. auch Figur 2). Beispielhaft wurden bei dem mittleren Sprührohrrost 3.4 sieben Kältemittelleitungsrohre 3.4.4 im Querschnitt gezeigt. Die kalte Luft wurde den einzelnen Sprührohrrosten 3.4 über die ihnen jeweils zugeordneten Kältemittelverteilerleitungen 3.4.4.2 zugeführt, die in der Form von T-Rohrstücken 3.4.7 von der Kältemittelzuführung 3.4.1 abzweigten, und über die ihnen jeweils zugeordneten Kältemittelsammelleitungen 3.4.4.3, die in der Form von T-Rohrstücken zusammengeführt wurden, über den Kältemittelauslass 3.4.3 abgeleitet. Bei der vorliegenden Ausführungsform der Vorrichtung 3 waren die Kältemittelverteilerleitungen 3.4.4.2 und die Kältemittelsammelleitungen 3.4.4.3 außerhalb der Außenwände 1.1 der Vorrichtung 1 angeordnet und wurden durch die Außenwände mithilfe gasdichter, thermisch isolierter Durchleitungen 3.4.4.4 in die Verwirbelungszone 3.1.2 geführt. Einzelheiten dieser Anordnung wurden in der Figur 2, Vergrößerung A1 des Zuführungsbereichs A, und Vergrößerung B1 des Auslassbereichs B noch einmal schematisch dargestellt.

Die in der Verwirbelungszone 3.1.2 gebildeten Graupel- und Grieselpartikel 3.5 traten in eine Fallzone 3.1.3 ein, die sich in ihrem Umriss konisch nach unten bis zu einem mittig und horizontal angeordneten, für Luft, Kältemittel und Graupel- und/oder Grieselpartikel 3.5 durchlässigen Siebboden 3.3 hin verjüngte. Die Graupel- und Grieselpartikel 3.5 fielen in Richtung des Siebbodens 3.3 und wurden durch die Lenkung 3.1.4 für Luft, Kältemittel und Graupel- und/oder Grieselpartikel 3.5 zum Siebboden 3.3 hin konzentriert.

Die Graupel- und/oder Grieselpartikel 3.5 wurden über die vom Siebboden 3.3 aus sich konisch verjüngende Lenkung 3.1.4 zusammen mit dem Luftstrom in die rotierende Zweistufenzentrifuge 3.7 geleitet, wo sie aus der Gasphase abgeschieden wurden. Die abgetrennten Graupel- und/oder Grieselpartikel 3.7.2 fielen über ein Auslassrohr in einen Auffangbehälter 3.9, worin sie mithilfe einer unter dem Boden angeordneten Heizplatte 3.10 aufgeschmolzen wurden und wieder einen flüssigen Spritzlack 3.8 bildeten. Der Auffangbehälter 3.1 konnte aus der Vorrichtung 1 bzw. aus der Vorrichtung 3 mit einer Ausfahrvorrichtung herausgefahren werden und sein Inhalt konnte demselben Verwendungszweck wie der ursprüngliche Spritzlack 2.4.2 zugeführt werden. Dies war ein erheblicher Vorteil gegenüber den Verfahren des Standes der Technik und hatte signifikante Einsparungen an Energie und Kosten zur Folge.

Die Abluft der Vorrichtung 1 wurde über Polizeifilter oder Nachfilter 4.1 in die Abluftkanäle 4 geleitet und gegebenenfalls wieder der Zuluft 2.1.1 hinzu gemischt.

Die Bauteile der Vorrichtung 1, die mit den Kältemitteln in Berührung kamen, waren nach außen hin gegen die Umgebung thermisch isoliert. Da bei den Spritznebeln 3.2 die Gefahr bestand, dass sie korrosiv waren, und bei den Graupel- und Grieselpartikel 3.5 die Gefahr des Abriebs und der Verkratzung der Bauteile bestand, waren die betreffenden Bauteile aus V4A-Stahl gefertigt. Dies gilt auch für die nachfolgend beschriebenen Ausführungsformen.

Trotz der Abwesenheit beweglicher Bauteile kam es in dem Verwirbelungsreaktor 3.1 zu einer besonders starken Verwirbelung und einer sofortigen Graupel- und/oder Grieselbildung. Insbesondere waren wegen der Abwesenheit beweglicher Bauteile in dem Verwirbelungsreaktor 3.1 die Wartungsintervalle signifikant länger.

Es ist außerdem ein weiterer wesentlicher Vorteil, dass die Bauweise der Vorrichtung 1 sehr kompakt ist und daher vergleichsweise wenig an wertvoller Fabrikfläche beansprucht. Außerdem bedingt die kompakte Bauweise einen geringeren Materialverbrauch, insbesondere an Bauteilen und Isoliermaterialien. Insgesamt ergeben sich dadurch ein signifikant geringerer Energieverbrauch und geringere Kosten als bei vergleichbaren Vorrichtungen des Standes der Technik.

Nicht zuletzt fällt - wenn überhaupt - nur wenig Sondermüll an.

### Figur 4 und 5

Die Figur 4 zeigt die Draufsicht auf den vertikalen Längsschnitt durch einen Ausschnitt der Vorrichtung 3, insbesondere den Verwirbelungsreaktor 3.1, zur Wiedergewinnung von Spritzlacken 3.8 aus Spritznebeln 3.2 von der Seite her, d.h., senkrecht zur Transportrichtung T für die Automobilkarosserien 2.7, gesehen.

Der Verwirbelungsreaktor 3.1 der Figur 4 unterschied sich von dem Verwirbelungsreaktor 3.1 der Figur 1 dadurch, dass vier Sprührohrroste 3.4 horizontal und parallel übereinander angeordnet waren und dass die Kältemittelverteilerleitung 3.4.4.2 und die Kältemittelsammelleitung 3.4.4.3 innerhalb des Verwirbelungsreaktors 3.1 angeordnet waren. Die die Kältemittelzuführung 3.4.1 und der Kältemittelauslass 3.4.3 wurden durch zwei gasdichte, thermisch isolierte Durchleitungen 3.4.4.4 durch die Außenwände 1.1 der Vorrichtung 1 geführt.

Bis zu der Linie des umlaufenden Übergangs 3.1.3.4 wiesen die Pufferzone 3.1.1, die Verwirbelungszone 3.1.2 und die Fallzone 3.1.3 denselben Umriss wie der Siebboden 2.9 auf. Deiner ging die Fallzone 3.1.3 mit einem konvex gebogenen Übergang 3.1.3.2 in die sich konisch verjüngende Fallzone 3.1.3 oder trichterförmige Verengung 3.1.3.1 über. Die trichterförmige Verengung 3.1.3.1 verlief bis zu dem horizontalen Siebboden 3.3, wobei ihr letzter Abschnitt einen konvex gebogenen Übergang 3.1.3.3 bildete. Die gebogenen Übergänge 3.1.3.2 und 3.1.3.3 bewirkten, dass keine Ecken vorhanden waren, in denen sich die Graupel- und Grieselpartikel 3.5 hätten ansammeln können.

Die V4A-Stahlwände des Verwirbelungsreaktors 3.1 wiesen eine verschleißfeste Beschichtung aus Chromnitrid als Antihaftschicht 3.4.8 auf.

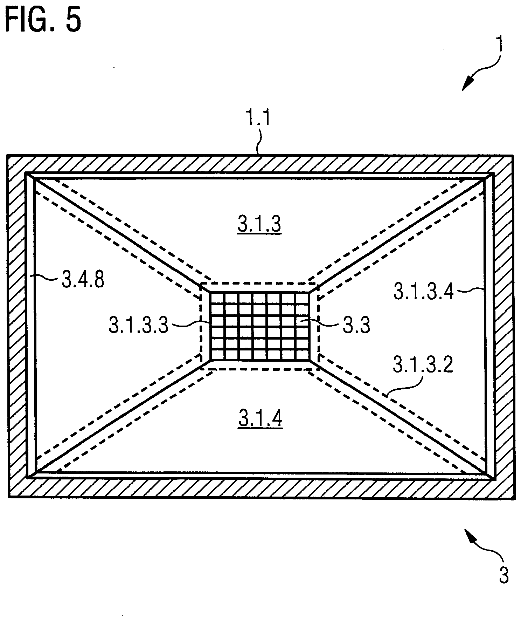

Die Ausführungsform wurde noch einmal anhand der Figur 5 verdeutlicht, die die Draufsicht auf die Fallzone 3.1.3 des Verwirbelungsreaktors 3.1 bis zur Linie des umlaufenden Übergangs 3.1.3.4 im Querschnitt von oben zeigte.

Es wurden dieselben Vorteile hinsichtlich der Wiedergewinnung von Spritzlacken 3.8 aus Spritznebeln 3.2 wie bei der Vorrichtung gemäß der Figur 1 erzielt. Trotz der Abwesenheit beweglicher Bauteile kam es zu einer besonders starken Verwirbelung und einer sofortigen Graupel- und/oder Grieselbildung. Insbesondere waren wegen der Abwesenheit beweglicher Bauteile in dem Verwirbelungsreaktor 3.1 die Wartungsintervalle signifikant länger.

### Figur 6

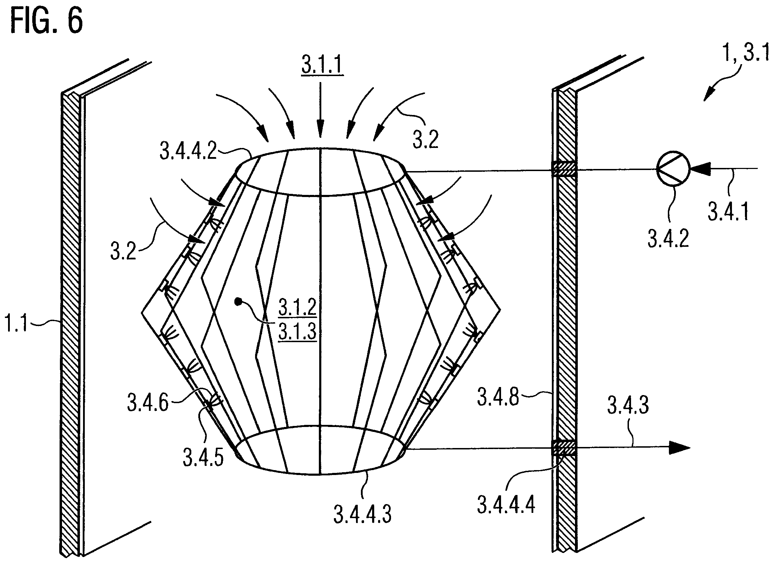

Figur 6zeigt einen Blick auf eine Kältevorrichtung 3.4 in der Verwirbelungszone 3.1.2 des Verwirbelungsreaktors 3.1 (Ausschnitt) in perspektivischer Darstellung.

Die Kältevorrichtung 3.4 war eine käfigförmige Konstruktion aus mehreren in im Wesentlichen vertikaler Richtung angeordneten, zu den Außenwänden 1.1 der Vorrichtung 1 hin gebogenen Kältemittelleitungsrohren 3.4.4. Die Kältemittelleitungsrohre 3.4.4 waren an ihren oberen Enden, d.h. an den der Pufferzone 3.1.1 zugewandten Enden, fluidmäßig an eine ringförmige Kältemittelverteilerleitung 3.4.4.2 angeschlossen. Die unteren Enden der Kältemittelleitungsrohre 3.4.4, d.h. an den der Fallzone 3.1.3 zugewandten Enden, waren fluidmäßig mit einer ringförmigen Kältemittelsammelleitung 3.4.4.3 verbunden. Die ringförmige Kältemittelverteilerleitung 3.4.4.2 und die ringförmige Kältemittelsammelleitung 3.4.4.3 waren deckungsgleich übereinander angeordnet. Die käfigförmige Konstruktion umschloss dadurch den größten Teil des Volumens der Verwirbelungszone 3.1.2.

Über die Kältemittelzuführung 3.4.1 wurde mithilfe der Förderpumpe 3.4.2 -20°C kalte, getrocknete Luft in die Kältemittelverteilerleitung 3.4.4.2. gepumpt. Sie trat aus den auf den Kältemittelleitungsrohren 3.4.4 angeordneten Kältemitteldüsen 3.4.5 in der Form von Kältemittelsprühkegeln 3.4.6 aus. Im oberen Teil der käfigförmigen Konstruktion waren die Kältemitteldüsen 3.4.5 auf das Zentrum der Konstruktion gerichtet, sodass ein Sog resultierte, der die Spritznebel 3.2 in die Verwirbelungszone 3.1.2 im Inneren der Konstruktion zog. Im unteren Teil der käfigförmigen Konstruktion waren die Kältemitteldüsen 3.4.5 auch auf das Zentrum der Konstruktion gerichtet, aber entgegen der Fallrichtung der Spritznebel 3.2. Durch diese Anordnung kam es auch ohne bewegliche Teile zu einer besonders starken Verwirbelung und einer sofortigen Graupel- und/oder Grieselbildung.

Die V4A-Stahlwände des Verwirbelungsreaktors 3.1 wiesen eine verschleißfeste Beschichtung aus Chromnitrid als Antihaftschicht 3.4.8 auf.

Die überschüssige kalte Luft wurde zu der Kältemittelsammelleitung 3.4.4.3 geführt und von dort über den Kältemittelauslass 3.4.3 ausgeleitet.

Die Kältemittelzuführung 3.4.1 und der Kältemittelauslass 3.4.3 wurden mittels gasdichter und thermisch isolierter Durchleitungen 3.4.4.4 durch die Außenwand 1.1 des Verwirbelungsreaktors 3.1 geführt.

Es wurden dieselben Vorteile hinsichtlich der Wiedergewinnung von Spritzlacken 3.8 aus Spritznebeln 3.2 wie bei der Vorrichtung gemäß der Figur 1 erzielt. Trotz der Abwesenheit beweglicher Bauteile kam es zu einer besonders starken Verwirbelung und einer sofortigen Graupel- und/oder Grieselbildung. Insbesondere waren wegen der Abwesenheit beweglicher Bauteile in dem Verwirbelungsreaktor 3.1 die Wartungsintervalle signifikant länger.

## Patentansprüche

1. Vorrichtung (1) zur Wiedergewinnung von Spritzlack (3.8, 2.4.2) aus Spritznebeln (3.2) von Spritzlackierkabinen (2), umfassend
(I) mindestens eine Spritzlackierkabine (2) mit
- mindestens einer Luftzuleitung (2.1),
- mindestens einem Verteilerraum (2.2),
- mindestens einer horizontal angeordneten, luftdurchlässigen Filterdecke (2.3),
- mindestens einer laminaren Luftströmung (2.5) in den Spritzkabinenraum (2.6), in dem mindestens ein mit einem Spritzlack (2.4.2) zu lackierendes Objekt (2.7) platziert ist,
- mindestens einer Spritzlackiervorrichtung (2.4) mit mindestens einer Sprühdüse (2.4.1) sowie
- mindestens einem horizontalen, für Luft und Spritznebel (3.2) durchlässigen Siebboden (2.9);
(II) mindestens eine Vorrichtung (3) zur Wiedergewinnung von Spritzlack (3.8) aus Spritznebeln (3.2) mit
- mindestens einem Verwirbelungsreaktor (3.1), der unterhalb des mindestens einen Siebbodens (2.9) angeordnet ist, umfassend, in dieser Reihenfolge von oben nach unten gesehen,
- mindestens eine thermische Pufferzone (3.1.1) mit dem gleichen horizontalen Umriss wie der mindestens eine Siebboden (2.9),
- mindestens eine Verwirbelungszone (3.1.2) mit dem gleichen horizontalen Umriss wie die mindestens eine mindestens eine thermische Pufferzone (3.1.1), umfassend mindestens eine feststehende, horizontal und/oder im Wesentlichen horizontal oder vertikal und/oder im Wesentlichen vertikal ausgerichtete Kältevorrichtung (3.4), gebildet von mindestens einem Kältemitteileitungsrohr (3.4.4) mit mindestens zwei Kältemitteldüsen (3.4.5), mindestens einer Kältemittelzuführung (3.4.1) und mindestens einem Kältemittelauslass (3.4.3) und
- mindestens einer Fallzone (3.1.3) mit einer Lenkung (3.1.4) für gebildete Graupel- und/oder Grieselpartikel (3.5), die unterhalb der Verwirbelungszone (3.1.2) den gleichen Umriss wie letztere hat und sich dann in ihrem Umriss konisch nach unten bis zu mindestens einem horizontal angeordneten, für Luft, Kältemittel und Graupel- und/oder Grieselpartikel (3.5) durchlässigen Siebboden (3.3) verjüngt,
- mindestens einer von dem mindestens einem Siebboden (3.3) ausgehenden mindestens einen Lenkung für Luft, Kältemittel und die Graupel- und/oder Grieselpartikel (3.5)
- zu mindestens einer Vorrichtung (3.7) zur Abscheidung der Graupelund/oder Grieselpartikel (3.5) aus der Gasphase und zu mindestens einem Austrag (3.7.1) der abgeschiedenen Graupel- und/oder Grieselpartikel (3.7.2),
- mindestens einen darunter angeordneten Auffangbehälter (3.9) für die abgeschiedenen Graupel- und/oder Grieselpartikel (3.7.2) und den wiedergewonnenen Spritzlack (3.8, 2.4.2) sowie
- mindestens einem Abluftkanal (4), dem mindestens ein Polizeifilter (4.1) vorgeschaltet ist

2. Vorrichtung (1) nach Anspruch 1, **dadurch gekennzeichnet, dass** es sich bei dem Spritzlack (2.4.2, 3.8) um einen wässrigen oder lösemittelhaltigen, physikalisch trocknenden Lack, oxidativ härtenden Lack, Zweikomponentenlack, Einbrennlack oder strahlenhärtbaren Lack handelt.

3. Vorrichtung (1) nach Anspruch 1 oder 2, **dadurch gekennzeichnet, dass** es sich bei dem Spritzlack (2.4.2, 3.8) um einen Schiffslack, Bautenlack, Möbellack, Kraftfahrzeuglack, Klarlack, Unidecklack, Basislack, Füller, Steinschlagschutzlack, Unterbodenschutzlack oder Reparaturlack handelt.

4. Vorrichtung (1) nach einem der Ansprüche 1 bis 3, **dadurch gekennzeichnet, dass** das Kältemittel eine Temperatur von -190°C bis 0°C hat und bei Raumtemperatur und unter Atmosphärendruck ein Gas ist.

5. Vorrichtung (1) nach einem der Ansprüche 1 bis 4, **dadurch gekennzeichnet, dass** die Höhe der thermischen Pufferzone (3.1.1) im Verwirbelungsreaktor (3.1) 10 bis 50 % der Gesamthöhe von thermischer Pufferzone (3.1.1) plus Verwirbelungszone (3.1.2) plus Fallzone (3.1.3) ausmacht.

6. Vorrichtung (1) nach einem der Ansprüche 1 bis 5, **dadurch gekennzeichnet, dass** in der Verwirbelungszone (3.1.2)
- mindestens zwei parallel und/oder über Kreuz sowie auf Lücke und/oder deckungsgleich übereinander angeordnete Kältevorrichtungen (3.4) in der Form von Sprührohrrosten angeordnet sind, denen über eine Kältemittelzuführung (3.4.1) mithilfe einer Förderpumpe (3.4.2) und einer Kältemittelverteilerleitung (3.4.4.2) Kältemittel unter Überdruck zuführbar und über eine Kältemittelsammelleitung (3.4.4.3) ausleitbar ist, wobei jedes Kältemittelleitungsrohr (3.4.4) eines Sprührohrrostes (3.4) mindestens zwei Kältemitteldüsen (3.4.5) mit einem Kältemitteldüsenkanal (3.4.5.1), aus dem das Kältemittel als Kältemittelsprühkegel (3.4.6) in die Verwirbelungszone (3.1.2) sprühbar ist, sowie aufweist, oder
- mindestens eine käfigförmige Kältevorrichtung (3.4) mit einer Kältemittelverteilerleitung (3.4.4.2) und einer Kältemittelsammelleitung (3.4.4.3), die beide jeweils einer gedachten geschlossenen Linie folgen, angeordnet ist, wobei die von der Kältemittelverteilerleitung (3.4.4.2) und der Kältemittelsammelleitung (3.4.4.3) umschlossenen Ebenen parallel oder im Wesentlichen parallel zueinander und horizontal oder im Wesentlichen horizontal oder vertikal oder im Wesentlichen vertikal angeordnet sind und wobei die Kältemittelleitungsrohre (3.4.4) die Kältemittelverteilerleitung (3.4.4.2) und die Kältemittelsammelleitung (3.4.4.3) fluidmäßig miteinander verbinden.

7. Vorrichtung (1) nach Anspruch 6, **dadurch gekennzeichnet, dass** die gedachten Linien kreisförmig, ellipsoid oder oval oder dreieckig, viereckig, trapezförmig, rautenförmig, fünfeckig, sechseckig, siebeneckig, achteckig oder sternförmig mit abgerundeten Ecken und/oder nach innen und/oder nach außen gebogenen Kanten sind.

8. Vorrichtung (1) nach Anspruch 6 oder 7, **dadurch gekennzeichnet, dass** die Kältemittelleitungsrohre (3.4.4) geradlinig, bezüglich des Käfigs nach innen und/oder nach außen gebogen, zickzackförmig, wellenförmig und/oder sägezahnförmig verlaufen.

9. Vorrichtung (1) nach einem der Ansprüche 1 bis 8, **dadurch gekennzeichnet, dass** die Vorrichtung (3.7) zur Abscheidung der Graupel- und/oder Grieselpartikel (3.5) aus der Gasphase eine mehrstufige Zentrifuge (3.7) und/oder ein Zyklon oder Fliehkraftabscheider (3.7) ist.

10. Vorrichtung (1) nach einem der Ansprüche 1 bis 9, **dadurch gekennzeichnet, dass** der Auffangbehälter (3.9) für die abgeschiedenen Graupel- und/oder Grieselpartikel (3.7.2) beheizbar ist.

11. Verfahren zur Wiedergewinnung von Spritzlack (2.4.2) aus Spritznebeln (3.2) von Spritzlackierkabinen (2), **dadurch gekennzeichnet, dass** man hierfür eine Vorrichtung (1) gemäß einem der Ansprüche 1 bis 10 verwendet.

12. Verfahren nach Anspruch 11, **dadurch gekennzeichnet, dass** man hierbei
(a) dem mindestens einen Spritzkabinenraum (2.6) mindestens einer Spritzlackierkabine (2) über mindestens eine Luftzuleitung (2.1), mindestens einen Verteilerraum (2.2) und mindestens eine horizontal angeordnete, luftdurchlässige Filterdecke (2.3) mindestens eine laminare Luftströmung (2.5) zuführt;
(b) in den mindestens einen Spritzkabinenraum (2.6) mindestens ein zu lackierendes Objekt (2.7) hängend oder stehend platziert und mithilfe mindestens einer manuell geführten Spritzlackierpistole (2.4) und/oder mindestens eines computergesteuerten Spritzlackierroboters (2.4), die oder der jeweils mindestens eine Sprühdüse (2.4.1) aufweist, mit mindestens einem Spritzlack (2.4.2) lackiert, so dass das mindestens eine zu lackierende Objekt (2.7) mit mindestens einem applizierten Spritzlack (2.7.1) bedeckt wird;
(c) die entstehenden, nach unten strömenden Spritznebel (3.2) über mindestens einen horizontalen, für Luft und Spritznebel (3.2) durchlässigen Siebboden (2.9) in mindestens eine thermische Pufferzone (3.1.1) mindestens eines Verwirbelungsreaktors (3.1) mindestens einer Vorrichtung (3) zur Wiedergewinnung von Spritzlacken (3.8, 2.4.2 aus Spritznebeln (3.2) einströmen lässt, wobei die mindestens eine Pufferzone (3.1.1) den gleichen horizontalen Umriss wie der mindestens eine Siebboden (2.9) aufweist;
(d) die nach unten strömenden Spritznebel (3.2) in mindestens eine Verwirbelungszone (3.1.2) des gleichen horizontalen Umrisses wie die mindestens eine thermische Pufferzone (3.1.1) einströmen lässt, worin die Spritznebel (3.2) mit Kältemittelwirbeln (3.1.2.1) intensiv vermischt werden, wodurch sich Graupel- und/oder Grieselpartikel (3.5) mit insgesamt derselben stofflichen Zusammensetzung wie die Spritznebel (3.2) bilden wobei die Kältemittelwirbel (3.1.2.1) mithilfe mindestens einer Kältevorrichtung (3.4), umfassend mindestens ein Kältemittelleitungsrohr (3.4.4) mit mindestens zwei Kältemitteldüsen (3.4.5), mindestens eine Kältemittelzuführung (3.4.1) und mindestens einen Kältemittelauslass (3.4.3), erzeugt werden;
(e) die in der mindestens einen Verwirbelungszone (3.1.2) erzeugten Graupelund/oder Grieselpartikel (3.5) zusammen mit dem Kältemittel und der Luft in mindestens eine Fallzone (3.1.3) einströmen lässt, wobei die mindestens eine Fallzone (3.1.3) unterhalb der mindestens einen Verwirbelungszone (3.1.2) den gleichen horizontalen Umriss wie letztere hat und mindestens eine Lenkung (3.1.4) für die fallenden Graupel- und/oder Grieselpartikel (3.5), die sich in ihrem Umriss konisch nach unten bis zu mindestens einem horizontal angeordneten, für Luft, Kältemittel und Graupel- und/oder Grieselpartikel (3.5) durchlässigen Siebboden (3.3) hin verjüngt;
(f) die durch den mindestens einen Siebboden (3.3) hindurchgetretenen Graupelund/oder Grieselpartikel (3.5) sowie das Kältemittel und die Luft in mindestens einer sich konisch verjüngenden Lenkung (3.6) mindestens einer Vorrichtung (3.7) zur Abscheidung der Graupel- und/oder Grieselpartikel (3.5) aus der Gasphase zuführt, worin die Graupel- und/oder Grieselpartikel (3.5) abgeschieden werden;
(g) die abgeschiedenen Graupel- und/oder Grieselpartikel (3.7.1) durch mindestens einen Austrag in mindestens einen darunter angeordneten Auffangbehälter (3.9) geleitet und aufgeschmolzen werden, sodass der Spritzlack (3.8, 2.4.2) gebildet wird; und
(h) die Luft und das Kältemittel durch mindestens ein Polizeifilter (4.1) und mindestens einen Abluftkanal (4) absaugt werden.

13. Verfahren nach Anspruch 11 oder 12, **dadurch gekennzeichnet, dass** der wiedergewonnene Spritzlack (3.8) wieder als Spritzlack (2.4.2) verwendet wird.

14. Verfahren nach einem der Ansprüche 11 bis 13, **dadurch gekennzeichnet, dass** das Kältemittel Luft ist.

15. Verfahren nach Anspruch 14, **dadurch gekennzeichnet, dass** die durch mindestens einen Abluftkanal (4) abgesaugte Luft wieder der Zuluft (2.1.1) zugemischt wird.

## Claims

1. A device (1) for recovering spray paint (3.8, 2.4.2) from spray mists (3.2) of spray painting booths (2), comprising
(I) at least one spray booth (2) with
- at least one air supply line (2.1),
- at least one distribution chamber (2.2),
- at least one horizontally arranged, air-permeable filter ceiling (2.3),
- at least one laminar air flow (2.5) into the spray booth space (2.6), in which at least one object (2.7) to be painted with a spray paint (2.4.2) is placed,
- at least one spray painting device (2.4) with at least one spray nozzle (2.4.1) as well as
- at least one horizontal screen (2.9) permeable to air and spray mist (3.2);
(II) at least one device (3) for recovering spray paint (3.8) from spray mists (3.2), having
- at least one swirl reactor (3.1) arranged below the at least one sieve bottom (2.9), comprising, seen in this order from top to bottom
- at least one thermal buffer zone (3.1.1) having the same horizontal contour as the at least one sieve bottom (2.9)
- at least one turbulence zone (3.1.2) having the same horizontal contour as the at least one thermal buffer zone (3.1.1), comprising at least one fixed refrigeration device (3.4) oriented horizontally and/or substantially horizontally or vertically and/or substantially vertically, formed by at least one refrigerant pipe (3.4.4) with at least two refrigerant nozzles (3.4.5), at least one refrigerant inlet (3.4.1) and at least one refrigerant outlet (3.4.3), and
- at least one drop zone (3.1.3) with a deflection (3.1.4) for the formed sleet particles and/or fine frozen grains (3.5), which has the same contour below the turbulence zone (3.1.2) as the latter and then tapers conically downwards in its contour to at least one horizontally arranged sieve bottom (3.3) permeable to air, refrigerant and sleet particles and/or fine frozen grains (3.5),
- at least one deflector for air, refrigerant and the sleet particles and/or fine frozen grains (3.5) extending from the at least one sieve bottom (3.3)
- at least one device (3.7) for separating the sleet particles and/or fine frozen grains (3.5) from the gas phase and at least one discharge (3.7.1) of the separated sleet particles and/or fine frozen grains (3.7.2),
- at least one collecting container (3.9) arranged below for the separated sleet particles and/or fine frozen grains (3.7.2) and the recovered spray paint (3.8, 2.4.2) as well as
- at least one exhaust air duct (4), which is preceded by at least one police filter (4.1).

2. Device (1) according to claim 1, **characterised in that** the spray paint (2.4.2, 3.8) is an aqueous or solvent-containing, physically drying paint, oxidatively curing paint, two-component paint, stoving paint or radiation-curable paint.

3. Device (1) according to claim 1 or 2, **characterised in that** the spray paint (2.4.2, 3.8) is a marine paint, architectural paint, furniture paint, automotive paint, clearcoat paint, topcoat paint, basecoat paint, filler, stone chip protection paint, underbody protection paint or repair paint.

4. Device (1) according to any one of claims 1 to 3, **characterized in that** the refrigerant has a temperature of -190°C to 0°C and is a gas at room temperature and under atmospheric pressure.

5. Decice (1) according to any one of claims 1 to 4, **characterised in that** the height of the thermal buffer zone (3.1.1) in the turbulence reactor (3.1) is 10 to 50% of the total height of the thermal buffer zone (3.1.1) plus the turbulence zone (3.1.2) plus the drop zone (3.1.3).

6. Device (1) according to one of claims 1 to 5, **characterised in that** in the turbulence zone (3.1.2)
- at least two refrigerating devices (3.4) in the form of spray pipe grates are arranged parallel and/or crosswise as well as on a gap and/or congruently one above the other, to which refrigerating devices (3.4) refrigerant is supplied under overpressure via a refrigerant supply (3.4.1) with the aid of a feed pump (3.4.2) and a refrigerant distribution line (3.4.4.2) and can be discharged via a refrigerant collecting pipe (3.4.4.3), wherein each refrigerant pipe (3.4.4) of a spray pipe grate (3.4) has has at least two refrigerant nozzles (3.4.5) with a refrigerant nozzle duct (3.4.5.1) from which the refrigerant can be sprayed as a refrigerant spray cone (3.4.6) into the turbulence zone (3.1.2), or
- at least one cage-shaped refrigerating device (3.4) with a refrigerant distributor line (3.4.4.2) and a refrigerant collecting line (3.4.4.3), both of which follow an imaginary closed line, is arranged, wherein the planes enclosed by the refrigerant distributor line (3.4.4.2) and the refrigerant collecting line (3.4.4. 3) are arranged parallel or substantially parallel to each other and horizontally or substantially horizontally or vertically or substantially vertically and wherein the refrigerant pipes (3.4.4) fluidly connect the refrigerant distribution pipe (3.4.4.2) and the refrigerant collecting pipe (3.4.4.3).

7. Device (1) according to claim 6, **characterised in that** the imaginary lines are circular, ellipsoidal or oval or triangular, square, trapezoidal, diamond-shaped, pentagonal, hexagonal, heptagonal, octagonal or star-shaped with rounded corners and/or inwardly and/or outwardly curved edges.

8. Device (1) according to claim 6 or 7, **characterised in that** the refrigerant pipes (3.4.4) are straight, bent inwards and/or outwards with respect to the cage, zigzag, wave-shaped and/or sawtooth-shaped.

9. Device (1) according to one of claims 1 to 8, **characterised in that** the device (3.7) for separating the sleet particles and/or fine frozen grains (3.5) from the gas phase is a multi-stage centrifuge (3.7) and/or a cyclone or centrifugal separator (3.7).

10. Device (1) according to any one of claims 1 to 9, **characterised in that** the collecting vessel (3.9) for the separated sleet particles and/or fine frozen grains (3.7.2) is heatable.

11. Process for recovering spray paint (2.4.2) from spray mists (3.2) of spray-painting booths (2), **characterized in that** a device (1) according to one of the claims 1 to 10 is used for this purpose.

12. The process according to claim 11, **characterized in that**
(a) at least one laminar air flow (2.5) is fed into the at least one spray booth space (2.6) of at least one spray-painting booth (2) via at least one air supply line (2.1), at least one distribution space (2.2) and at least one horizontally arranged, air-permeable filter ceiling (2.3);
(b) at least one object (2.7) to be painted is placed in the at least one spray booth space (2.6) in a hanging or standing position and is spray-painted with the aid of at least one manually guided spray-painting gun (2.4) and/or at least one computer-controlled spray-painting robot (2. 4), each having at least one spray nozzle (2.4.1), with at least one spray paint (2.4.2), so that the at least one object (2.7) to be painted is covered with at least one applied spray paint (2.7.1);
(c) the resulting spray mist (3.2), which flows downwards, is conveyed via at least one horizontal screen (2.9), which is permeable to air and spray mist (3.2), into at least one thermal buffer zone (3.1.1) of at least one turbulence reactor (3. 1) of at least one apparatus (3) for the recovery of spray coatings (3.8, 2.4.2) from spray mists (3.2), the at least one buffer zone (3.1.1) having the same horizontal contour as the at least one sieve bottom (2.9);
(d) allowing the downwardly flowing spray mist (3.2) to flow into at least one turbulence zone (3.1.2) of the same horizontal contour as the at least one thermal buffer zone (3.1.1), wherein the spray mist (3.2) is intensively mixed with refrigerant vortices (3.1.2.1), whereby sleet particles and/or fine frozen grains (3.5) with overall the same material composition as the spray mists (3.2), the refrigerant vortices (3.1.2.1) being generated with the aid of at least one refrigeration device (3.4) comprising at least one refrigerant pipe (3.4.4) with at least two refrigerant nozzles (3.4.5), at least one refrigerant feed (3.4.1) and at least one refrigerant outlet (3.4.3);
(e) the sleet particles and/or fine frozen grains (3.5) generated in the at least one turbulence zone (3.1.2) flow together with the refrigerant and the air into at least one drop zone (3.1.3), wherein the at least one drop zone (3.1.3) below the at least one turbulence zone (3.1.2) has the same horizontal contour as the latter and at least one deflection (3.1.4) for the falling sleet particles and/or fine frozen grains (3.5), which tapers conically downwards in its contour as far as at least one horizontally arranged sieve bottom (3.3) permeable to air, refrigerant and sleet particles and/or fine frozen grains (3.5);
(f) the sleet particles and/or fine frozen grains (3.5) which have passed through the at least one sieve bottom (3.3) as well as the refrigerant and the air are fed in at least one conically tapering deflection (3.6) to at least one device (3.7) for separating the sleet particles and/or fine frozen grains (3.5) from the gas phase, wherein the sleet particles and/or fine frozen grains (3.5) are separated;
(g) the separated sleet particles and/or fine frozen grains (3.7.1) are passed through at least one discharge into at least one collecting container (3.9) arranged below and melted so that the spray paint (3.8, 2.4.2) is formed; and
(h) the air and refrigerant are exhausted through at least one police filter (4.1) and at least one exhaust duct (4).

13. Process according to claim 11 or 12, **characterized in that** the recovered spray paint (3.8) is reused as spray paint (2.4.2).

14. Process according to any one of claims 11 to 13, **characterized in that** the refrigerant is air.

15. Pethod according to claim 14, **characterised in that** the air extracted through at least one exhaust duct (4) is mixed again with the supply air (2.1.1).

## Revendications

1. Dispositif (1) pour la récupération de peinture par pulvérisation (3.8, 2.4.2) à partir de brouillards de pulvérisation (3.2) de cabines de peinture par pulvérisation (2), comprenant
(I) au moins une cabine de peinture au pistolet (2) avec
- au moins une conduite d'alimentation en air (2.1)
- au moins un espace de distribution (2.2),
- au moins un plafond filtrant (2.3) disposé horizontalement et perméable à l'air,
- au moins un flux d'air laminaire (2.5) dans l'espace de la cabine de pulvérisation (2.6), dans lequel est placé au moins un objet (2.7) à peindre avec une peinture au pistolet (2.4.2),
- au moins un dispositif de peinture au pistolet (2.4) avec au moins une buse de pulvérisation (2.4.1) ainsi que
- au moins un fond de tamis (2.9) horizontal, perméable à l'air et au brouillard de pulvérisation (3.2);
(II) au moins un dispositif (3) pour la récupération de peinture pulvérisée (3.8) à partir de brouillards de pulvérisation (3.2) avec
- au moins un réacteur de tourbillonnement (3.1), qui est disposé sous le au moins un fond de tamis (2.9), comprenant, dans cet ordre, de haut en bas,
- au moins une zone tampon thermique (3.1.1) ayant le même contour horizontal que le au moins un fond de tamis (2.9),
- au moins une zone de tourbillonnement (3.1.2) ayant le même contour horizontal que la au moins une zone tampon thermique (3.1.1), comprenant au moins un dispositif frigorifique (3.4) fixe, orienté horizontalement et/ou sensiblement horizontalement ou verticalement et/ou sensiblement verticalement, formé d'au moins un tube de conduite de réfrigérant (3.4.4) avec au moins deux buses de réfrigérant (3.4.5), au moins une arrivée de réfrigérant (3.4.1) et au moins une sortie de réfrigérant (3.4.3) et
- au moins une zone de chute (3.1.3) avec une direction (3.1.4) pour les particules de grésil et/ou pour les grains fins (3.5) formées, qui a le même contour que la zone de tourbillonnement (3.1.2) en dessous de cette dernière et dont le contour se rétrécit ensuite de manière conique vers le bas jusqu'à au moins un fond de tamis (3.3) disposé horizontalement et perméable à l'air, au réfrigérant et aux particules de grésil et/ou aux grains fins à l'état congelé (3.5),
- d'au moins une direction partant de l'au moins un fond de tamis (3.3) pour l'air, le fluide frigorigène et les particules de grésil et/ou pour les grains fins à l'état congelé (3.5)
- à au moins un dispositif (3.7) pour séparer les particules de grésil et/ou les grains fins (3.5) de la phase gazeuse et à au moins une évacuation (3.7.1) des particules de grésil et/ou des grains fins à l'état congelé séparées (3.7.2),
- au moins un récipient collecteur (3.9) disposé en dessous pour les particules de grésil et/ou pour les grains fins grains fins à l'état congelé séparées (3.7.2) et la peinture par pulvérisation récupérée (3.8, 2.4.2) ainsi que
- au moins un canal d'évacuation d'air (4), en amont duquel est monté au moins un filtre de police (4.1).

2. Dispositif (1) selon la revendication 1, **caractérisé en ce que** la peinture au pistolet (2.4.2, 3.8) est une peinture aqueuse ou contenant des solvants, à séchage physique, une peinture à durcissement par oxydation, une peinture à deux composants, une peinture à cuire ou une peinture durcissable par rayonnement.

3. Dispositif (1) selon la revendication 1 ou 2, **caractérisé en ce que** la painture à pulvériser (2.4.2, 3.8) est une peinture marine, une peinture de construction, une peinture pour meubles, une peinture pour véhicules automobiles, une peinture transparente, un vernis, une peinture de base, un apprêt, une peinture de protection contre les gravillons, une peinture de protection des dessous de caisse ou une peinture de réparation.

4. Dispositif (1) selon l'une des revendications 1 à 3, **caractérisé en ce que** le fluide frigorigène a une température comprise entre -190°C et 0°C et est un gaz à température ambiante et sous pression atmosphérique.

5. Dispositif (1) selon l'une des revendications 1 à 4, **caractérisé en ce que** la hauteur de la zone tampon thermique (3.1.1) dans le réacteur de fluidisation (3.1) représente 10 à 50 % de la hauteur totale de la zone tampon thermique (3.1.1) plus la zone de fluidisation (3.1.2) plus la zone de chute (3.1.3).

6. Dispositif (1) selon l'une des revendications 1 à 5, **caractérisé en ce que**, dans la zone de tourbillonnement (3.1.2)
- au moins deux dispositifs frigorifiques (3.4) disposés parallèlement et/ou en croix ainsi que sur un espace et/ou en coïncidence l'un sur l'autre sont disposés sous la forme de grilles tubulaires de pulvérisation auxquelles sont raccordés, par l'intermédiaire d'une alimentation en réfrigérant (3.4.1), à l'aide d'une pompe d'alimentation (3.4.2) et d'une conduite de distribution de réfrigérant (3.4.4. 2) et peut être évacué par une conduite collectrice de réfrigérant (3.4.4.3), chaque tube de conduite de réfrigérant (3.4.4) d'une grille de tube de pulvérisation (3.4) présente au moins deux buses de réfrigérant (3.4.5) avec un canal de buse de réfrigérant (3.4.5.1), à partir duquel le réfrigérant peut être pulvérisé sous forme de cône de pulvérisation de réfrigérant (3.4.6) dans la zone de tourbillonnement (3.1.2), ou bien
- au moins un dispositif frigorifique en forme de cage (3.4) est disposé avec une conduite de distribution de réfrigérant (3.4.4.2) et une conduite de collecte de réfrigérant (3.4.4.3), qui suivent toutes deux une ligne fermée imaginaire, les niveaux de la conduite de distribution de réfrigérant (3.4.4.2) et de la conduite de collecte de réfrigérant (3.4.4.3) sont disposés parallèlement ou sensiblement parallèlement l'un à l'autre et horizontalement ou sensiblement horizontalement ou verticalement ou sensiblement verticalement, et dans lequel les tubes de conduite de fluide frigorigène (3.4.4) relient de manière fluidique la conduite de distribution de fluide frigorigène (3.4.4.2) et la conduite de collecte de fluide frigorigène (3.4.4.3).

7. Dispositif (1) selon la revendication 6, **caractérisé en ce que** les lignes imaginaires sont circulaires, ellipsoïdales ou ovales ou triangulaires, carrées, trapézoïdales, en forme de losange, pentagonales, hexagonales, heptagonales, octogonales ou en forme d'étoile avec des coins arrondis et/ou des bords pliés vers l'intérieur et/ou vers l'extérieur.

8. Dispositif (1) selon la revendication 6 ou 7, **caractérisé en ce que** les tubes de conduite de réfrigérant (3.4.4) sont rectilignes, courbés vers l'intérieur et/ou vers l'extérieur par rapport à la cage, en forme de zigzag, d'ondulation et/ou de dents de scie.

9. Dispositif (1) selon l'une des revendications 1 à 8, **caractérisé en ce que** le dispositif (3.7) pour séparer les particules de grésil et/ou les grains fins à l'état congelé (3.5) de la phase gazeuse est une centrifugeuse (3.7) à plusieurs étages et/ou un cyclone ou un séparateur centrifuge (3.7).

10. Dispositif (1) selon l'une des revendications 1 à 9, **caractérisé en ce que** le récipient collecteur (3.9) pour les particules de grésil et/ou pour les grains fins à l'état congelé (3.7.2) séparées peut être chauffé.

11. Procédé de récupération de peinture pulvérisée (2.4.2) à partir de brouillards de pulvérisation (3.2) de cabines de peinture par pulvérisation (2), **caractérisé en ce que** l'on utilise à cet effet un dispositif (1) selon l'une des revendications 1 à 10.

12. Procédé selon la revendication 11, **caractérisé en ce que**
(a) on amène au moins un flux d'air laminaire (2.5) dans au moins un espace de cabine de pulvérisation (2.6) d'au moins une cabine de peinture par pulvérisation (2) par l'intermédiaire d'au moins une conduite d'alimentation en air (2.1), d'au moins un espace de distribution (2.2) et d'au moins un plafond filtrant (2.3) disposé horizontalement et perméable à l'air;
(b) on place dans l'au moins un espace de cabine de peinture (2.6) au moins un objet à peindre (2.7) suspendu ou debout et on le peint à l'aide d'au moins un pistolet de peinture au pistolet à commande manuelle (2.4) et/ou d'au moins un robot de peinture au pistolet commandé par ordinateur (2.4), qui présente respectivement au moins une buse de pulvérisation (2.4.1), est peint avec au moins une peinture à pulvériser (2.4.2), de sorte que le au moins un objet à peindre (2.7) est recouvert d'au moins une peinture à pulvériser appliquée (2.7.1);
(c) les brouillards de pulvérisation (3.2) qui se forment et s'écoulent vers le bas sont introduits, par l'intermédiaire d'au moins un fond perforé horizontal (2.9) perméable à l'air et aux brouillards de pulvérisation (3.2), dans au moins une zone tampon thermique (3.1.1) d'au moins un réacteur de tourbillonnement (3. 1) d'au moins un dispositif (3) pour la récupération de peintures par pulvérisation (3.8, 2.4.2) à partir de brouillards de pulvérisation (3.2), la au moins une zone tampon thermique (3.1.1) présentant le même contour horizontal que le au moins un fond de tamis (2.9);
(d) faire s'écouler les brouillards de pulvérisation (3.2) s'écoulant vers le bas dans au moins une zone de tourbillonnement (3.1.2) de même contour horizontal que la au moins une zone tampon thermique (3.1.1), dans laquelle les brouillards de pulvérisation (3.2) sont mélangés de manière intensive avec des tourbillons de réfrigérant (3.1,2,1), ce qui permet de former des particules de grésil et/ou pour les grains fins à l'état congelé (3.5) ayant globalement la même composition matérielle que les brouillards de pulvérisation (3.2), les tourbillons de fluide frigorigène (3.1.2.1) étant générés à l'aide d'au moins un dispositif frigorifique (3.4), comprenant au moins un tube de conduite de fluide frigorigène (3.4.4) avec au moins deux buses de fluide frigorigène (3.4.5), au moins une amenée de fluide frigorigène (3.4.1) et au moins une sortie de fluide frigorigène (3.4.3) ;
(e) les particules de grésil et/ou les grains fins à l'état congelé (3.5) produites dans la au moins une zone de tourbillonnement (3.1.2) s'écoulent avec le réfrigérant et l'air dans au moins une zone de chute (3.1.3), la au moins une zone de chute (3.1.3) étant située au-dessous de la au moins une zone de tourbillonnement (3.1.2) a le même contour horizontal que cette dernière et au moins une direction (3.1.4) pour les particules de grésil et/ou pour les grains fins à l'état congelé (3.5) qui tombent, dont le contour se rétrécit de manière conique vers le bas jusqu'à au moins un fond de tamis (3.3) disposé horizontalement et perméable à l'air, au fluide frigorigène et aux particules de grésil et/ou pour les grains fins à l'état congelé (3.5) ;
(f) amène les particules de grésil et/ou les grains fins à l'état congelé (3.5) passées à travers l'au moins un fond de tamis (3.3) ainsi que le fluide frigorigène et l'air dans au moins une direction (3.6) se rétrécissant en cône à au moins un dispositif (3.7) pour séparer les particules de grésil et/ou les grains fins à l'état congelé (3.5) de la phase gazeuse, dans lequel les particules de grésil et/ou pour les grains fins à l'état congelé (3.5) sont séparées ;
(g) les particules de grésil et/ou les grains fins à l'état congelé (3.7.1) séparées sont conduites par au moins une évacuation dans au moins un récipient collecteur (3.9) disposé en dessous et sont fondues, de sorte que la peinture au pistolet (3.8, 2.4.2) est formée ; et
(h) l'air et le fluide frigorigène sont aspirés par au moins un filtre de police (4.1) et au moins un conduit d'évacuation d'air (4).

13. Procédé selon la revendication 11 ou 12, **caractérisé en ce que** la peinture par pulvérisation récupérée (3.8) est réutilisée comme peinture par pulvérisation (2.4.2).

14. Procédé selon l'une des revendications 11 à 13, **caractérisé en ce que** le fluide frigorigène est de l'air.

15. Procédé selon la revendication 14, **caractérisé en ce que** l'air aspiré par au moins un canal d'évacuation d'air (4) est à nouveau mélangé à l'air d'alimentation (2.1.1).
